# EUROPEAN PATENT SPECIFICATION

(11) **EP 4 556 328 B1**
(45) Date of publication and mention of the grant of the patent: **11.11.2026**
(21) Application number: 23839221.1
(22) Date of filing: 06.03.2023
(51) Int. Cl.: B60T 13/68, B60T 8/17, B60T 8/94, B60T 8/96, B60T 13/58, B60T 17/18

(54) **BRAKE DEVICE**
BREMSVORRICHTUNG
DISPOSITIF DE FREIN

(30) Priority: 11.07.2022 JP 2022111125
(43) Date of publication of application: 21.05.2025
(73) Proprietor: Astemo, Ltd., Tokyo 100-0004 (JP)
(72) Inventor: WATANABE Asahi, Tokyo 100-8280 (JP); OOSAWA Toshiya, Tokyo 100-8280 (JP); KONISHI Masaru, Tokyo 100-8280 (JP)
(74) Representative: MERH-IP Matias Erny Reichl Hoffmann Patentanwälte PartG mbB
(86) International application number: PCT/JP2023/008351
(87) International publication number: WO 2024/014041

(56) References cited:
- WO-A1-2020/250695
- DE-C2- 19 509 150
- JP-A- 2008 149 807
- JP-A- 2010 254 259
- JP-A- 2018 149 936
- JP-A- 2018 149 998
- JP-A- 2019 026 005
- US-A1- 2008 007 116
- US-A1- 2016 096 434
- US-A1- 2021 053 540

## Description

### Technical Field

The present invention relates to a brake device compatible with automated driving.

### Background Art

Regarding the automated driving, according to the automated driving level and the responsibility sharing division defined in SAE_J3016, the control responsibility occurs on the system side at a so-called Level 3 or higher, and at Level 3, the final operation responsibility at the time of defect is the driver, but the failure determination and the control transition are guaranteed by the system side. In addition, the entire state is guaranteed by the system at Level 4 or higher. Therefore, in a system component for automated driving, high reliability is required, and redundancy that allows a function to be maintained at the time of defect is required.

In the brake control device as well, redundancy for reliably allowing the vehicle to decelerate/stop at the time of defect is essential. In addition, from the viewpoint of expanding the limited area in the automated driving vehicle, it is more preferable that an antilock brake system (ABS) and an anti-skid function remain even if one failure occurs in the brake control device. This is because it is not possible to define the situation of the road surface and the vehicle motion state at that time with respect to a failure that occurs accidentally. Otherwise, there is no choice but to limit limited areas such as vehicle speed, weather conditions, and road conditions. In order to realize the ABS and the anti-skid function in addition to the normal braking as described above, a function of independently controlling the braking force of each wheel of the vehicle and a control device therefor are required. PTL 1 discloses a brake control device including two fluid pressure control units (first fluid pressure control unit, second fluid pressure control unit) as the redundant configuration.

In PTL 1, the first fluid pressure control unit and the second fluid pressure control unit have the same configuration, and each of the fluid pressure control units includes a brake fluid pressure output unit for independently braking four wheels, the output unit being connected to a wheel cylinder provided in each wheel. When viewed from one wheel cylinder, a plurality of fluid pressure control devices are connected, and even if one fluid pressure control unit fails, the brake control can be continuously performed by the other unit. Therefore, redundancy of maintaining the fluid pressure control function of each of the four wheels at the time of defect is achieved. A further example is disclosed in the US2021053540 A1.

### Citation List

### Patent Literature

PTL 1: US 2018/0334150 A1

### Summary of Invention

### Technical Problem

In the conventional brake control device described above, each wheel cylinder is connected to two fluid pressure output devices, and thus it is necessary to operate the two fluid pressure control units in cooperation when the system is normal, and the fluid pressure control law may become complex.

In addition, since each wheel cylinder is connected to two fluid pressure output devices, if a failure occurs in one fluid pressure control unit, the disturbance influence of the fluid pressure generated by the failure may directly affect the other fluid pressure control unit via the pipe. From such a viewpoint as well, the fluid pressure control law requires system design assuming disturbance factors from the other side with respect to various failure modes, and there is a possibility that state transition at the time of fail-safe operation becomes complex.

An object of the present invention is to provide a brake device that reliably generates wheel cylinder fluid pressure for all the wheels FR to RR even at the time of such failure, can reliably decelerate/stop the vehicle, further simplifies the fluid pressure control law while performing the fluid pressure control function of each of the four wheels, and has high reliability for automated driving.

### Solution to Problem

In order to solve the above problem, a brake device of the present invention is a brake device mounted on a vehicle, the brake device including:
a first fluid pressure unit configured to supply brake fluid to a plurality of first wheel cylinders,
a second fluid pressure unit configured to supply brake fluid to a plurality of second wheel cylinders,
a connection pipe configured to couple the first fluid pressure unit and the second fluid pressure unit to cause the brake fluid to flow; the first fluid pressure unit including,
a first cutoff valve configured to cut off flow of the brake fluid to and from the connection pipe,
a first pressure regulation unit configured to regulate pressure of the brake fluid supplied to the plurality of first wheel cylinders, and
a first control unit configured to control opening and closing of the first cutoff valve and the first pressure regulation unit,
the second fluid pressure unit including,
a second cutoff valve configured to cut off flow of the brake fluid to and from the connection pipe,
a second pressure regulation unit configured to regulate pressure of the brake fluid supplied to the plurality of second wheel cylinders, and
a second control unit configured to control opening and closing of the second cutoff valve and the second pressure regulation unit,
a third pressure regulation unit configured to regulate brake fluid pressures supplied from the first pressure regulation unit to the plurality of first wheel cylinders, respectively,
a fourth pressure regulation unit configured to regulate brake fluid pressures supplied from the second pressure regulation unit to the plurality of second wheel cylinders, respectively, and
a third control unit configured to control the third pressure regulation unit and the fourth pressure regulation unit.

### Advantageous Effects of Invention

According to the present invention, when a failure occurs in one of the two fluid pressure units, the discharge fluid pressure of the other fluid pressure unit is supplied to the one fluid pressure unit through the connection pipe, and at that time, the brake fluid pressure supplied to each wheel cylinder is regulated, whereby the fluid pressure of each of the four wheels can be controlled, and higher reliability can be obtained as the brake device.

Further features related to the present invention will become apparent from the description of the present specification and the accompanying drawings. Problems, configurations, and effects other than those described above will be clarified by the following description of embodiment.

### Brief Description of Drawings

[FIG. 1] FIG. 1 is a diagram illustrating a configuration of a fluid pressure control system according to a first embodiment.
[FIG. 2] FIG. 2 is a flowchart illustrating a flow of brake control process in a control unit according to the first embodiment.
[FIG. 3] FIG. 3 is a flowchart illustrating a flow of brake control process in a control unit according to the first embodiment.
[FIG. 4] FIG. 4 is a diagram illustrating a configuration of a fluid pressure control system according to a second embodiment.
[FIG. 5] FIG. 5 is a diagram illustrating a modified example of the configuration of the fluid pressure control system according to the second embodiment.
[FIG. 6] FIG. 6 is a diagram illustrating a configuration of a fluid pressure control system according to a third embodiment.
[FIG. 7] FIG. 7 is a diagram illustrating a configuration of a fluid pressure control system according to a fourth embodiment.
[FIG. 8] FIG. 8 is a diagram illustrating a configuration of a fluid pressure control system according to a fifth embodiment.

### Description of Embodiments

### [First Embodiment]

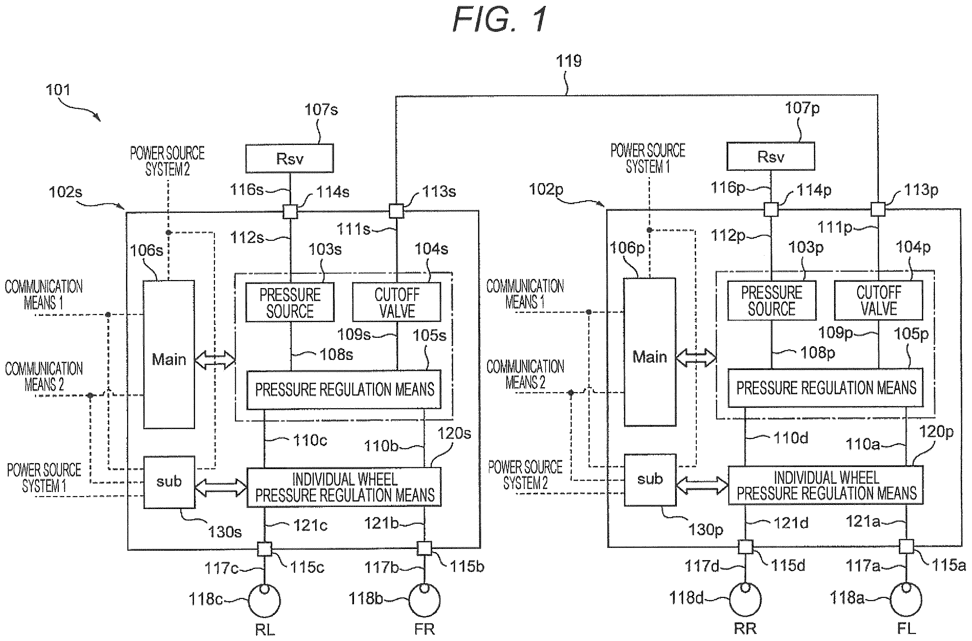

FIG. 1 is a configuration diagram of a fluid pressure control system 101 according to a first embodiment.

The fluid pressure control system 101 is a system mainly assuming application to an automated driving vehicle of Level 4 or higher, and constitutes a brake device mounted on the vehicle. In each part of FIG. 1, the end p of the reference sign corresponds to a primary system (P system) of a wheel cylinder 118. The end s of the reference sign corresponds to a secondary system (S system) of the wheel cylinder 118. Hereinafter, when the P and S systems are not distinguished, description of p and s is omitted. Furthermore, the end a of the reference sign corresponds to the left front wheel FL. Similarly, the end b corresponds to the right front wheel FR, the end c corresponds to the left rear wheel RL, and the end d corresponds to the right rear wheel RR. When the wheels FL to RR are not distinguished, the reference signs a, b, c, and d are omitted. In addition, the end f of the reference sign corresponds to the front wheel FL/FR, and the end r corresponds to the rear wheel RL/RR. When the front wheel and the rear wheel are not distinguished, the reference signs f and r are omitted.

The fluid pressure control system 101 causes a wheel cylinder (braking force applying unit) 118 to generate a brake fluid pressure (wheel cylinder fluid pressure) to press a brake pad provided on each of the wheels FL to RR against a brake disc provided on the wheel side and apply a braking force to each of the wheels FL to RR. The wheel cylinder 118 is provided on each of the four wheels.

The fluid pressure control system 101 includes a first unit 102p and a second unit 102s. Each of the first unit 102p and the second unit 102s is a unit integrally provided with a pressure source 103, a cutoff valve 104, a pressure regulation means 105, the individual wheel pressure regulation means 120, a main controller 106, and a sub controller 130.

The first unit 102p and the second unit 102s have a unit connection port 113, a suction port 114, and a wheel cylinder port 115.

The unit connection port 113 is connected to a unit connection pipe 119 and is connected to the cutoff valve 104 via a connection liquid path 111. Furthermore, the first unit 102p and the second unit 102s are coupled by way of the unit connection pipe 119.

The suction port 114 is connected to a suction hose 116 and is connected to the pressure source 103 by way of a connection liquid path 112. Furthermore, the first unit 102p and the second unit 102s are connected to a reservoir tank 107 by way of the suction hose 116. The reservoir tank 107 is a brake fluid source that stores brake fluid, and is a low-pressure portion opened to atmospheric pressure.

The wheel cylinder port 115 is connected to the wheel cylinder pipe 117, connected to the individual wheel pressure regulation means 120 by way of a connection liquid path 121, and further connected to the pressure regulation means 105 by way of the connection liquid path 110. The first unit 102p and the second unit 102s are connected to the wheel cylinder 118 by way of the wheel cylinder pipe 117. The primary system of the first unit 102p is connected to the left front-wheel wheel cylinder 118a and the right rear-wheel wheel cylinder 118d, while the secondary system of the second unit 102s is connected to the right front-wheel wheel cylinder 118b and the left rear-wheel wheel cylinder 118c, that is, a so-called X (cross) pipe configuration is adopted. An H pipe connecting the front wheel to the primary system and the rear wheel to the secondary system may be adopted.

Furthermore, the pressure source 103 and the pressure regulation means 105 are connected via a connection liquid path 108. In addition, the cutoff valve 104 and the pressure regulation means 105 are connected via a connection liquid path 109.

The pressure source 103 takes in the brake fluid stored in the reservoir tank 107 based on a command from the main controller 106 and discharges a required flow rate to the pressure regulation means 105.

The pressure regulation means 105 regulates the pressure of the brake fluid supplied from the pressure source 103 and outputs a desired pressure to the wheel cylinder 118 side and the cutoff valve 104 side based on a command from the main controller 106. Here, in the pressure regulation means 105, the connection liquid path 109 and the connection liquid path 110 communicate with each other (not illustrated in the drawing). Furthermore, the pressure regulation means 105 has a configuration capable of independently performing fluid pressure control of the output wheel cylinder 118.

The cutoff valve 104 is opened/closed based on a command from the main controller 106 to communicate/cut off between the connection liquid path 109 and the connection liquid path 111. Note that the cutoff valve 104 has a so-called normal open structure, and is opened, that is, the connection liquid path 109 and the connection liquid path 111 are in an open = communicated state when there is no command (electric signal) from the main controller 106 and no energization.
the individual wheel pressure regulation means 120 is a backup pressure regulation means (redundant wheel pressure regulation means) in a case where an abnormality occurs in the system and the braking force (fluid pressure) control of each wheel is not possible with only the pressure source 103, the cutoff valve 104, and the pressure regulation means 105. An individual wheel pressure regulation means 120 regulates the brake fluid pressure supplied to the plurality of wheel cylinders.

The main controller 106 receives a signal (target brake fluid pressure) from another ECU by the communication means. In addition, an application for preventing an unstable behavior of the vehicle, specifically, an ABS or an anti-skid function is mounted, and a function of monitoring the vehicle behavior, the wheel speed, and the like and adjusting the braking force of each wheel as necessary is provided. The pressure source 103, the cutoff valve 104, and the pressure regulation means 105 are controlled so as to obtain the fluid pressure that achieves the desired braking force, and the fluid pressure of each wheel is controlled. The main controller 106 includes a microcontroller, an actuator driver, a communication means, software, and the like.

The sub controller 130 controls the individual wheel pressure regulation means 120, and includes a microcontroller, an actuator driver, a communication means, software, and the like. Two systems (a first power supply and a second power supply) of the power source system 1 and the power source system 2 are power supply-connected to the sub controller 130. The sub controller 130 is configured to be accommodated inside one ECU together with the main controller 106, but functions of the sub controller 130 and the main controller 106 are independent from each other and are not affected by each other's failure.

The wheel cylinders 118a and 118d of the present example correspond to a plurality of first wheel cylinders in the Claims, the wheel cylinders 118b and 118c of the present example correspond to a plurality of second wheel cylinders in the Claims, the first unit 102p and the second unit 102s of the present example correspond to a first fluid pressure unit and a second fluid pressure unit in the Claims, and the unit connection pipe 119 of the present example corresponds to a connection pipe in the Claims. The cutoff valves 104p and 104s of the present example correspond to a first cutoff valve and a second cutoff valve in the Claims, and the main controllers 106p and 106s of the present example correspond to a first control unit and a second control unit in the Claims. A configuration in which the pressure sources 103p and 103s and the pressure regulation means 105p and 105s are combined according to the present example corresponds to a first pressure regulation means and a second pressure regulation means in the Claims. Furthermore, the individual wheel pressure regulation means 120p and 120s of the present example correspond to a third pressure regulation unit and a fourth pressure regulation unit in the Claims, the sub controller 130 corresponds to a third control unit, and the sub controllers 130p and 130s correspond to a fourth control unit and a fifth control unit.

Next, an operation of the fluid pressure control system 101 according to the first embodiment will be described.

### (Normal Control at time of System Normal)

In the first unit 102p and the second unit 102s, the cutoff valve 104 is closed and the connection liquid path 109 and the connection liquid path 111 are cut off from each other by a command from the main controller 106. In addition, the pressure source 103 and the pressure regulation means 105 are controlled, a desired pressure is output to the wheel cylinder 118, and a required braking force is applied to each of the wheels FL to RR of the wheel cylinder 118. At this time, the individual wheel pressure regulation means 120 is not operated at all. Therefore, the connection liquid paths 110 and 121 have exactly the same pressure, and the output result of the pressure regulation means 105 is directly reflected on the wheel cylinder 118.

When the main controller 106 detects the unstable behavior of the vehicle and the braking force operation by the ABS or the anti-skid function is required, the pressure regulation means 105 supplies the required pressure to the wheel cylinder 118 to apply the required braking force to each of the wheels FL to RR. At this time, in the application software of the ABS or the anti-skid function, at least one of the first unit 102p and the second unit 102s can perform the control intervention determination/braking force operation amount calculation. For example, when the main controller 106p of the first unit 102p mainly performs control calculation, the fluid pressure command value of the wheel cylinders 118b/118c connected to the second unit 102s may be transmitted to the main controller 106s using the communication means and controlled by the main controller 106s. Of course, conversely, the second unit 102s may mainly perform the calculation and transmit the fluid pressure command value to the first unit 102p. Alternatively, the first unit 102p and the second unit 102s may independently determine control intervention and operation. Since the two fluid pressure units having the same function are configured, such a combination is possible.

### (Backup Control in System Defect)

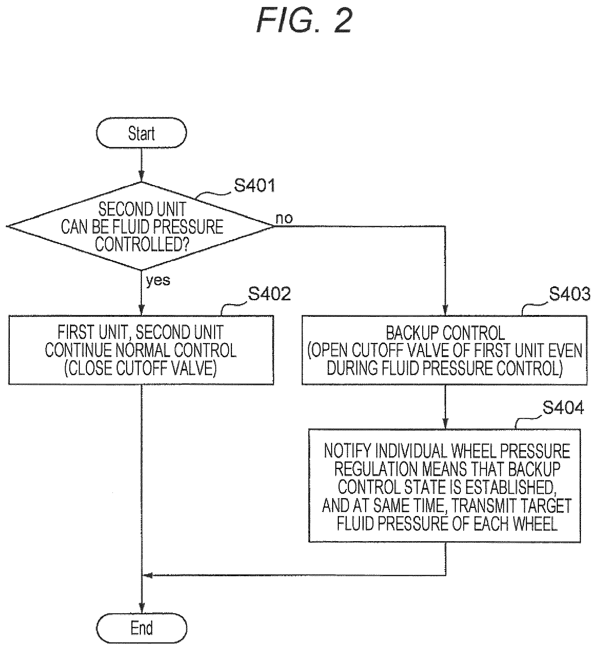

Here, as an example, process performed by the main controller 106 when the pressure regulation means of the second unit 102s is defected (failed) will be described according to the flowchart of FIG. 2.

In step S401, determination is made on whether or not the second unit 102s can be fluid pressure controlled. The determination is made by a failure detection logic (not illustrated) of the pressure source 103, the cutoff valve 104, the pressure regulation means 105, and the main controller 106 incorporated in the main controller 106, and the process proceeds to step S402 when determined that the fluid pressure control is possible, and proceeds to step S403 when determined that the fluid pressure control is not possible = the system defect.

In step S402, the normal control at the time of the system normal described in the [0027] above is continued.

In step S403, the process shifts to backup control, and the process proceeds to step S404. Accordingly, the cutoff valve 104p of the first unit 102p is opened. With this operation, the connection liquid path 109p and the connection liquid path 111p communicate with each other, and the pressure regulated by the pressure regulation means 105p is applied to the unit connection port 113s of the second unit 102s via the unit connection pipe 119 together with the wheel cylinders 118a/118d.

In step S404, the sub controller 130 is notified that the system has shifted to the backup control, and the target fluid pressure of each wheel is transmitted via the communication means 1 or 2 (first communication unit or second communication unit). The individual wheel pressure regulation means 120 recognizes that the backup control is performed, and controls the fluid pressure of each wheel cylinder.

When the second unit 102s determines that the system defect has occurred, the pressure source 103s, the cutoff valve 104s, and the pressure regulation means 105s are all deactivated (de-energized), the cutoff valve 104s is opened, and the connection liquid path 109s and the connection liquid path 111s communicate with each other. That is, the main controllers 106p and 106s open both cutoff valves 104p and 104s when detecting a failure of one of the first unit 102p and the second unit 102s.

Therefore, the pressure regulated by the pressure regulation means 105p of the first unit 102p enters the unit connection port 113s of the second unit 102s through the connection liquid path 111p, the unit connection port 113p, and the connection liquid path 119 in addition to the connection liquid path 110a/110d, and is also applied to the connection liquid path 111s, the connection liquid path 109s, the pressure regulation means 105s, and the connection liquid path 110b/110c.

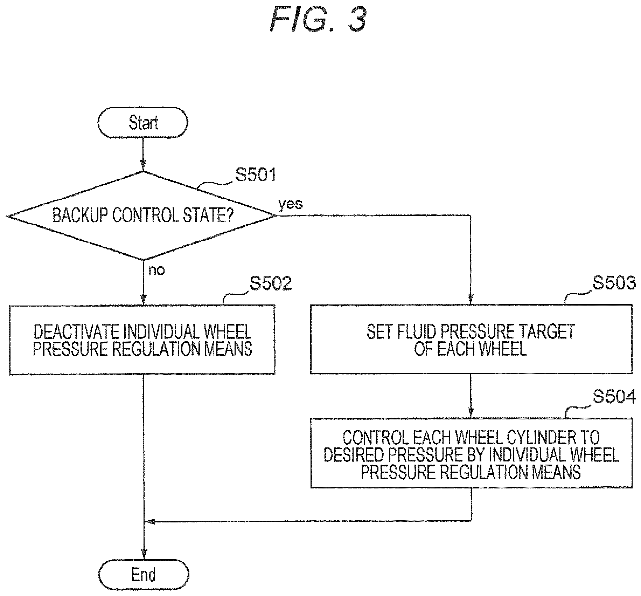

Subsequently, process performed by the sub controller 130 will be described according to the flowchart of FIG. 3.

This process is performed in each of the sub controllers 130p/130s of the first unit 102p and the second unit 102s. The sub controller 130 is configured independently of the main controller 106 so as not to be affected by failure, and the sub controller 130s and the individual wheel pressure regulation means 120s can continue to perform their functions even if the main controller 106s of the second unit 102s fails and pressure regulation cannot be performed. For example, when detecting a failure of the main controller 106s, the sub controller 130s controls the individual wheel pressure regulation means 120p and the individual wheel pressure regulation means 120s in cooperation with the pressure regulation means 105p. When a failure of the main controller 106p is detected, the sub controller 130p controls the individual wheel pressure regulation means 120p and the individual wheel pressure regulation means 120s in cooperation with the pressure regulation means 105s.

In step S501, whether in the backup state is determined. This is determined based on whether a failure of any pressure regulation system has occurred in the first unit 102p or the second unit 102s and backup control is requested (flowchart of FIG. 2). In step S501, when determined as not the backup control state (i.e., when the system is normal), the process proceeds to step S502.

In step S502, the normal control at the time of the system normal described in the [0027] above is continued. That is, the individual wheel pressure regulation means 120 is not operated, and the pressure regulated by the pressure regulation means 105 is transmitted to the wheel cylinder 118 as it is.

In a case where it is determined in step S501 as the backup control state, the process proceeds to step S503. In step S503, the fluid pressure target of each wheel is received. In this case, the fluid pressure target of each wheel based on the calculation result of the first unit 102p is received via the communication means 1 or 2. Next, the process proceeds to step S504.

In step S504, the individual wheel pressure regulation means 120 controls each pressure to each received wheel fluid pressure. As described in [0032] above, since the supplied brake fluid of the pressure source 103p of the normal system can be transmitted to the connection liquid path 110 of the first unit 102p and the second unit 102s, the brake fluid may be distributed to each wheel cylinder 118. Therefore, the individual wheel pressure regulation means 120 regulates the pressure of the brake fluid supplied to the connection liquid path 110, and finally regulates the fluid pressure of each wheel.

As described above, the fluid pressure in the connection liquid paths 110a/110d of the first unit 102p is further regulated by the individual wheel pressure regulation means 120p, and is applied to the wheel cylinders 118a/118d via the connection liquid paths 121a/121d, the wheel cylinder ports 115a/115d, and the wheel cylinder pipe 117a/117d. The fluid pressure in the connection liquid path 110b/110c of the second unit 102s is further regulated by the individual wheel pressure regulation means 120s, and is also applied to the wheel cylinders 118b/118c via the connection liquid paths 121b/121c, the wheel cylinder ports 115b/115c, and the wheel cylinder pipe 117b/117c.

As a result, even when the second unit 102s is defected, a desired pressure is output to each of the wheel cylinders 118a to 118d similarly to the time of system normal, and it becomes possible to independently apply a required braking force to each of the wheels FL to RR of the wheel cylinder 118.

Note that the above is an example of a case where the second unit 102s is defected, but even in a case where the first unit 102p is defected, the first unit 102p and the second unit 102s are merely interchanged in the process of step S403, and the operation itself is similar.

Next, operational effects of the first embodiment will be described.

The fluid pressure control system 101 of the first embodiment includes two fluid pressure units (same units) having the same configuration, that is, a first unit 102p and a second unit 102s, where the first unit 102p includes a main controller 106p, the second unit 102s includes a main controller 106s, and in each unit 102, a cutoff valve 104 controlled only by the main controller 106 included in each unit 102 is provided, and upstream sides (side opposite to a wheel cylinder) of the cutoff valves 104 provided in each unit 102 are coupled by the unit connection pipe 119.

As described above, since the two units 102p and 102s and the main controllers 106p and 106s, which are the ECUs included in the units 102p and 102s, are separated, even if a failure occurs in either one of the units/ECUs, the other unit/ECU is not affected by the failure, and therefore, the discharge fluid pressure from the other unit can be supplied to all the wheels FL to RR, and the braking force can be secured.

Furthermore, by providing the individual wheel pressure regulation means 120 and the sub controller 130 that controls the same in each of the fluid pressure units 102p and 102s, it is possible to the individually regulate the fluid pressure generated in the fluid pressure unit in each wheel, it is possible to redundantly continue the braking force control such as more advanced ABS and anti-skid function, and it is possible to obtain higher reliability as a brake device.

In addition, although the two units have the same configuration, since the two units operate independently by the cutoff valve 104 when the system is normal, the first/second unit can be control-constructed in consideration of only the fluid pressure control of the connected wheel cylinder, so that the control and the influence consideration at the time of failure are simplified. Therefore, there is also an advantage that the system configuration is simplified.

### [Second Embodiment]

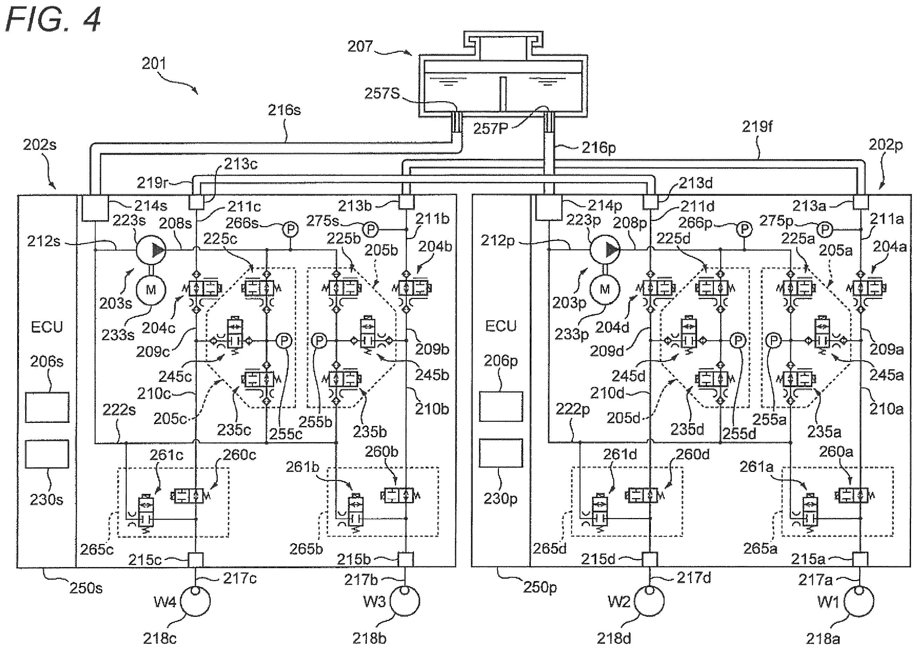

Next, a second embodiment of the present invention will be described with reference to FIG. 4. Note that components similar to those in the first embodiment are denoted by the same reference numerals, and a detailed description thereof will be omitted.

FIG. 4 is a configuration diagram of a fluid pressure control system 201 according to the second embodiment, which is illustrated using more specific hydraulic circuit components with respect to the first embodiment. Similarly to the first embodiment, a system mainly assumed to be applied to automated driving vehicles of higher than or equal to Level 4 is provided.

The fluid pressure control system 201 causes a wheel cylinder (braking force applying unit) 218a to 218d to generate a brake fluid pressure (wheel cylinder fluid pressure) to press a brake pad provided on each of the wheels FL to RR against a brake disc provided on the wheel side and apply a braking force to each of the wheels FL to RR.

The fluid pressure control system 201 includes a first unit 202p and a second unit 202s. Each of the first unit 202p and the second unit 202s is a unit integrally provided with a pressure source 203, a cutoff valve 204, a pressure regulation means 205, the individual wheel pressure regulation means 265, and an ECU 250.

The first unit 202p and the second unit 202s have a unit connection port 213, a suction port 214, and a wheel cylinder port 215.

The unit connection port 213 is connected to a unit connection pipe 219 and is connected to the cutoff valve 204 via a connection liquid path 211. Furthermore, the first unit 202p and the second unit 202s are connected by way of the unit connection pipe 219.

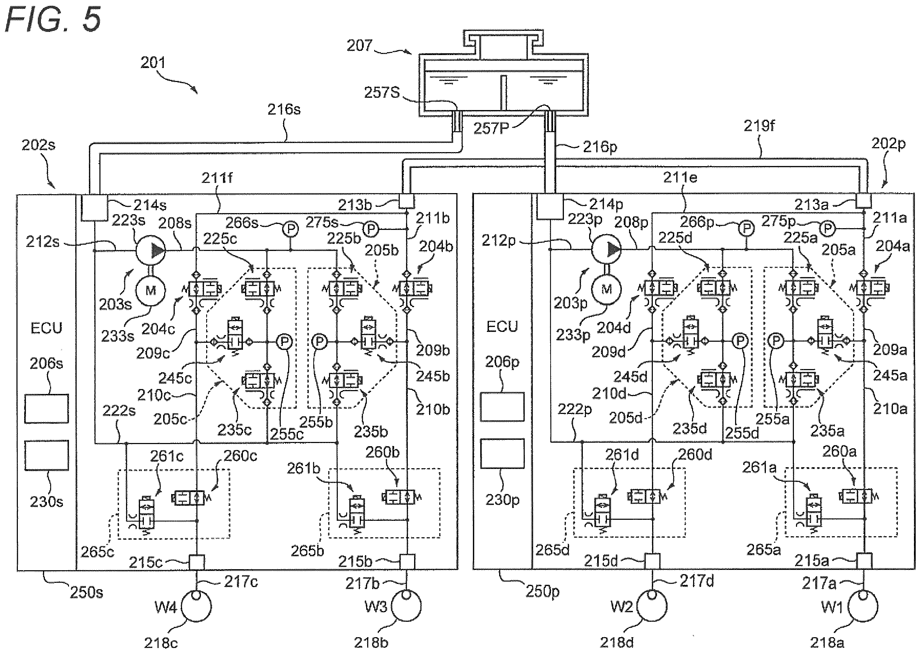

In the configuration example illustrated in FIG. 4, two unit connection pipes 219f and 219r are used, the unit connection pipe 219f connects between the unit connection port 213a of the first unit 202p and the unit connection port 213b of the second unit 202s, and the unit connection pipe 219r connects between the unit connection port 213d of the first unit 202p and the unit connection port 213c of the second unit 202s. As another configuration example, as illustrated in FIG. 5, the first unit 202p and the second unit 202s may be connected with one unit connection pipe 219f, and may be branched from the connection liquid paths 211a and 211b to the connection liquid paths 211e and 211f inside the first unit 202p and the second unit 202s. According to the configuration example illustrated in FIG. 5, the number of connection pipe can be reduced to one as compared with the configuration example illustrated in FIG. 4, and the number of components and the number of processes can be reduced.

The suction port 214 is connected to a suction hose 216 and is connected to the pressure source 203 by way of a connection liquid path 212. Furthermore, the first unit 202p and the second unit 202s are connected to a reservoir tank 207 by way of the suction hose 216. Specifically, the reservoir tank 207 is partitioned into two sections, where a primary liquid chamber 257p is connected to the first unit 202p, and a secondary liquid chamber 257s is connected to the second unit 202s. Note that the reservoir tank 207 is a brake fluid source that stores brake fluid, and is a low-pressure portion opened to atmospheric pressure.

The wheel cylinder port 215 is connected to the wheel cylinder pipe 217 and is connected to the pressure regulation means 205 via the connection liquid path 210. An individual wheel pressure regulation means 265 is provided on the connection liquid path 210. The first unit 202p and the second unit 202s are connected to the wheel cylinder 218 by way of the wheel cylinder pipe 217. The primary system of the first unit 202p is connected to the left front-wheel wheel cylinder 218a and the right rear-wheel wheel cylinder 218d, while the secondary system of the second unit 202s is connected to the right front-wheel wheel cylinder 218b and the left rear-wheel wheel cylinder 218c, that is, a so-called X (cross) pipe configuration is adopted. An H pipe connecting the front wheel to the primary system and the rear wheel to the secondary system may be adopted.

Furthermore, the pressure source 203 and the pressure regulation means 205 are connected via a connection liquid path 208. In addition, the cutoff valve 204 and the pressure regulation means 205 are connected via a connection liquid path 209.

The pressure source 203 includes a pump 223 and a motor 233 that drives the pump. Based on a command from the main controller 206 of the ECU 250, the motor 233 is rotationally controlled to suck the brake fluid stored in the reservoir tank 207 and discharge a required flow rate to the pressure regulation means 205.

The pressure regulation means 205 includes a pressure increasing control valve 225, a pressure reducing control valve 235, a communication valve 245, a pressure sensor 255, and a pressure sensor 266, and regulates the pressure of the brake fluid supplied from the pressure source 203 based on a command from the main controller 206 of the ECU 250. That is, when the pressure detected by the pressure sensor 255/266 is fed back and increased, the pressure increasing control valve 225 is opened and the pressure reducing control valve 235 is closed, and when the pressure is reduced, the pressure increasing control valve 225 is closed and the pressure reducing control valve 235 is opened to obtain a desired pressure. The regulated pressure is output to the wheel cylinder 218 and to the cutoff valve 204 side by opening the communication valve 245. One of each of the pressure increasing control valve 225, the pressure reducing control valve 235, the communication valve 245, and the pressure sensor 255 are assigned to each wheel cylinder 218. For example, the pressure increasing control valve 225a, the pressure reducing control valve 235a, the communication valve 245a, and the pressure sensor 255a are assigned to the FL-wheel wheel cylinder 218a. Therefore, the brake fluid supplied from the pressure source 203 can be independently regulated so that the wheel cylinder of each wheel has a desired pressure. Therefore, the fluid pressure control system 201 can independently regulate the pressures of all the four wheels.

The cutoff valve 204 is opened/closed based on a command from the main controller 206 of the ECU 250 to communicate/cut off between the connection liquid path 209 and the connection liquid path 211. Note that the cutoff valve 204 has a so-called normal open structure, and is opened, that is, the connection liquid path 209 and the connection liquid path 211 are in an open = communicated state when there is no command (electric signal) from the ECU 250 and no energization.

The individual wheel pressure regulation means 265 includes a backup pressure increasing valve 260 and a backup pressure reducing valve 261. Based on a command from the sub controller 230 of the ECU 250, the backup pressure increasing valve 260 can control the pressure increasing amount by limiting the inflow to the wheel cylinder 218 with respect to the flow rate generated in the connection liquid path 210 at the time of the backup control. The backup pressure reducing valve 261 can control the pressure reducing amount of the wheel cylinder 218 by causing the pressure generated in the wheel cylinder to flow out to the connection liquid path 222. Therefore, if there is a means for pouring the brake fluid into the connection liquid path 210, the pressure regulation of each wheel can be continued.

The ECU 250 is an electronic control unit (ECU) that controls the first unit 202p and the second unit 202s, and includes a main controller 206 and a sub controller 230.

The main controller 206 receives a signal (target brake fluid pressure) from another ECU by the communication means. In addition, an application for preventing an unstable behavior of the vehicle, specifically, an ABS or an anti-skid function is mounted, and a function of monitoring the vehicle behavior, the wheel speed, and the like and adjusting the braking force of each wheel as necessary is provided. The pressure source 203, the cutoff valve 204, and the pressure regulation means 205 are controlled to control the fluid pressure of each wheel so as to obtain the fluid pressure that achieves the desired braking force.

The sub controller 230 controls the individual wheel pressure regulation means 265, and includes a microcontroller, an actuator driver, a communication means, software, and the like. Two systems of the power source system 1 and the power source system 2 are power supply connected to the sub controller 230. Although the sub controller 230 and the main controller 206 are accommodated inside one ECU, the functions of the sub controller and the main controller are independent from each other and are not affected by each other's failure.

The wheel cylinders 218a and 218d of the present example correspond to a first wheel cylinder in the Claims, the wheel cylinders 218b and 218c of the present example correspond to a second wheel cylinder in the Claims, the first unit 202p and the second unit 202s of the present example correspond to a first fluid pressure unit and a second fluid pressure unit in the Claims, and the unit connection pipe 219 of the present example corresponds to a connection pipe in the Claims. The cutoff valves 204p and 204s of the present example correspond to a first cutoff valve and a second cutoff valve in the Claims, and the main controllers 206p and 206s of the present example correspond to a first control unit and a second control unit in the Claims. A configuration in which the pressure sources 203p and 203s and the pressure regulation means 205p and 205s are combined according to the present example corresponds to a first pressure regulation means and a second pressure regulation means in the Claims. Furthermore, the wheel pressure regulation means 265a/265d and 265b/265c of the present example correspond to the third pressure regulation means and the fourth pressure regulation means in the Claims, the sub controller 230 corresponds to the third control unit, and the sub controller 230p/230s corresponds to the fourth control unit and the fifth control unit.

Next, an operation of the fluid pressure control system 201 according to the second embodiment will be described.

### (Normal Control at time of System Normal)

In the first unit 202p and the second unit 202s, the cutoff valve 204 is closed and the connection liquid path 209 and the connection liquid path 211 are cut off from each other by a command from the main controller 206 of the ECU 250. In addition, the pressure source 203 and the pressure regulation means 205 are controlled, a desired pressure is output to the wheel cylinder 218, and a required braking force is applied to each of the wheels FL to RR of the wheel cylinder 218. At this time, the individual wheel pressure regulation means 265 is in a standby state where nothing is performed, and the pressure generated by the pressure regulation means 205 is transmitted to the wheel cylinder 218 as it is.

When the main controller 206 detects the unstable behavior of the vehicle and the braking force operation by the ABS or the anti-skid function is required, the pressure regulation means 205 supplies the required pressure to the wheel cylinder 118 to apply the required braking force to each of the wheels FL to RR. At this time, in the application of the ABS or the anti-skid function, at least one of the first unit 202p and the second unit 202s can perform the control intervention determination/braking force operation amount calculation. For example, when the main controller 206p of the first unit 202p mainly performs the control calculation, the fluid pressure command value of the wheel cylinders 218b/218c connected to the second unit 202s may be transmitted to the main controller 206s using the communication means and controlled by the main controller 206s. Of course, conversely, the main controller 206s of the second fluid pressure unit 202s may mainly perform the calculation and transmit the fluid pressure command value to the first unit 202p. Alternatively, the controllers of the first unit 202p and the second unit 202s may independently determine the control intervention and the operation. Since the two units having the same function are prepared, such a combination is possible.

### (Backup Control in System Defect)

Here, as an example, process performed by the main controller 206 of the ECU 250 when the second unit 202s is defected will be described according to the flowchart of FIG. 2.

In step S401, determination is made on whether or not the second unit 202s can be fluid pressure controlled. The determination is made by a failure detection logic (not illustrated) of the pressure source 203, the cutoff valve 204, the pressure regulation means 205, and the ECU 250 incorporated in the main controller 206p of the ECU 250p, and the process proceeds to step S402 when determined that the fluid pressure control is possible, and proceeds to step S403 when determined that the fluid pressure control is not possible = the system defect.

In step S402, the normal control at the time of the system normal described in the [0065] above is continued.

In step S403, the process shifts to the backup control. That is, the cutoff valves 204a/204d of the first unit 202p are opened. With this operation, the connection liquid path 209a and the connection liquid path 211a and the connection liquid path 209d and the connection liquid path 211d communicate with each other, and the pressure regulated by the pressure regulation means 205a/205d is applied to the unit connection port 213b/213c of the second unit 202s via the unit connection pipe 219 together with the wheel cylinders 218a/218d.

In step S404, the sub controller 130 is notified that the system has shifted to the backup control, and the target fluid pressure of each wheel is transmitted via the communication means 1 or 2. The individual wheel pressure regulation means 265 recognizes that the backup control is performed, and controls the fluid pressure of each wheel cylinder.

Furthermore, when the second unit 202s determines that system defect has occurred, the pressure source 203s, the cutoff valve 204b/204c, and the pressure regulation means 205b/205c are also deactivated (de-energized), the cutoff valve 204b/204c is opened, and the connection liquid path 209b and the connection liquid path 211b and the connection liquid path 209c and the connection liquid path 211c communicate with each other.

Therefore, the pressure regulated by the pressure regulation means 205a/205d of the first unit 202p is also applied from the unit connection port 213b/213c of the second unit 202s to the connection liquid paths 211b/211c, the connection liquid paths 209b/209c, and the connection liquid paths 210b/210c.

Subsequently, process performed by the sub controller 230 will be described according to the flowchart of FIG. 3.

This process is performed in each of the sub controllers 230p/230s of the first unit 202p and the second unit 202s. The sub controller 230 is configured independently of the main controller 206 so as not to be affected by failure, and the sub controller 230s and the individual wheel pressure regulation means 265b/265c can continue to perform their functions even if the main controller 206s of the second unit 202s fails and pressure regulation cannot be performed.

In step S501, whether in the backup state is determined. This is determined based on whether a failure of any pressure regulation system has occurred in the first unit 202p or the second unit 202s and a backup control is requested (flowchart of FIG. 2). In step S501, when determined as not the backup control state (i.e., when the system is normal), the process proceeds to step S502.

In step S502, the normal control at the time of the system normal described in the [0065] above is continued. That is, the individual wheel pressure regulation means 265 is not operated, and the pressure regulated by the pressure regulation means 205 is transmitted to the wheel cylinder 218 as it is.

In a case where it is determined in step S501 as the backup control state, the process proceeds to step S503. In step S503, the fluid pressure target of each wheel is received. In this case, the fluid pressure target of each wheel based on the calculation result of the first unit 202p is received via the communication means 1 or 2. Next, the process proceeds to step S504.

In step S504, the individual wheel pressure regulation means 265 controls each pressure to each received wheel fluid pressure. As described in [0070] above, since the supplied brake fluid of the pressure source 203p of the normal system can be transmitted to the connection liquid path 210 of the first unit 202p and the second unit 202s, the brake fluid may be distributed to each wheel cylinder 218. Therefore, the individual wheel pressure regulation means 265 regulates the pressure of the brake fluid supplied to the connection liquid path 210, and finally regulates the fluid pressure of each wheel.

The individual wheel pressure regulation means 265 regulates the pressure of the brake fluid supplied to the connection liquid path 210 using the backup pressure increasing valve 260 and the backup pressure reducing valve 261, and finally regulates the fluid pressure of each wheel. At this time, a pressure sensor is not used for detecting the pressure of the wheel cylinder, but the amount of pressure increase/reduction is estimated, and slight accuracy deterioration is tolerated. In the estimation, characteristics of the differential pressure and the flow rate generated in the electromagnetic valve are grasped in advance by experiments or the like, and the amount of brake fluid flowing into the caliper is obtained from the flow rate per unit time to estimate the pressure. Note that as the differential pressure generated in the electromagnetic valve, the pressure of the connection liquid path 210 can be detected by the pressure sensor 255 of the normal system, and an estimated value is used as the pressure of the wheel cylinder.

As described above, the fluid pressure in the connection liquid path 210a/210d of the first unit 202p is regulated by the individual wheel pressure regulation means 265a/265d, and is applied to the wheel cylinders 218a/218d via the wheel cylinder ports 215a/215d and the wheel cylinder pipe 217a/217d. The fluid pressure in the connection liquid path 210b/210c of the second unit 202s is regulated by the individual wheel pressure regulation means 265b/265c, and is also applied to the wheel cylinders 218b/218c via the wheel cylinder ports 215b/215c and the wheel cylinder pipe 217b/217c.

As a result, even when the second unit 202s is defected, a desired pressure is output to the wheel cylinder 218 similarly to the time of system normal, and it becomes possible to independently apply a required braking force to each of the wheels FL to RR of the wheel cylinder 118.

Note that the above is an example of a case where the second unit 202s is defected, but even in a case where the first unit 202p is defected, the first unit 202p and the second unit 202s are merely interchanged in the process of step S403, and the operation itself is similar.

Next, operational effects of the second embodiment will be described.

In the fluid pressure control system 201 of the second embodiment, two fluid pressure units having the same configuration, that is, a first unit 202p and a second unit 202s are provided, where the first unit 202p includes an ECU 250p, the second unit 202s includes an ECU 250s, and in each fluid pressure unit, a cutoff valve 204 controlled only by a main controller 206 included in each fluid pressure unit is provided, and upstream sides (side opposite to the wheel cylinder) of the cutoff valves 204 provided in each fluid pressure unit are connected by the unit connection pipe 219.

Therefore, since the two fluid pressure units and the ECUs included in each fluid pressure unit are separated, even if a failure occurs in either one of the fluid pressure units/ECUs, the other fluid pressure unit/ECU is not affected by the failure, and thus, the discharge fluid pressure from the other fluid pressure unit can be supplied to all the wheels, and the braking force can be secured, so that higher reliability can be obtained.

Furthermore, by providing the individual wheel pressure regulation means 265 and the sub controller 230 in each fluid pressure unit, it becomes possible to the individually regulate the fluid pressure generated in the fluid pressure unit in each wheel, so that braking force control such as more advanced ABS and anti-skid function can be redundantly continued, and higher reliability can be obtained as a brake device.

In addition, although the two units have the same configuration, since the two units operate independently by the cutoff valve 104 when the system is normal, the first/second unit can be control-constructed in consideration of only the fluid pressure control of the connected wheel cylinder, so that the control and the influence consideration at the time of failure are simplified. Therefore, there is also an advantage that the system configuration is simplified.

### [Third Embodiment]

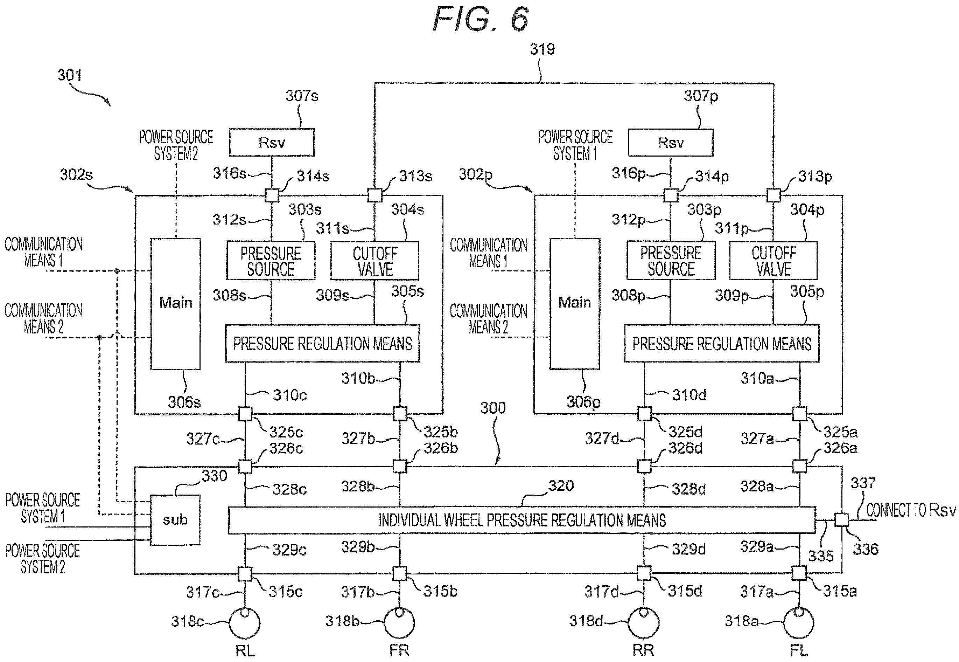

FIG. 6 is a configuration diagram of a fluid pressure control system 401 according to a third embodiment. Similarly to the first and second embodiments, the fluid pressure control system 401 is a system mainly assumed to be applied to an automated driving vehicle of higher than or equal to Level 4. A characteristic feature of the present embodiment is that the individual wheel pressure regulation means for backup and the sub controller are newly provided as a third unit separate from the first unit and the second unit.

The fluid pressure control system 301 causes a wheel cylinder (braking force applying unit) 418 to generate a brake fluid pressure (wheel cylinder fluid pressure) to press a brake pad provided on each of the wheels FL to RR against a brake disc provided on the wheel side and apply a braking force to each of the wheels FL to RR.

The fluid pressure control system 301 includes a first unit 302p, a second unit 302s, and a third unit 300. Each of the first unit 302p and the second unit 302s is a unit integrally provided with a pressure source 303, a cutoff valve 304, a pressure regulation means 305, and a main controller 306. The third unit 300 is a unit in which an individual wheel pressure regulation means 320 and the sub controller 330 are integrally provided. As a difference from the first and second examples, the individual wheel pressure regulation means is separated into an independent fluid pressure unit (third unit 300). As a result, a sub controller 330 can be configured alone.

The first unit 302p and the second unit 302s include a unit connection port 313, a suction port 314, and an output port 325.

The unit connection port 313 is connected to a unit connection pipe 319 and is connected to the cutoff valve 304 via a connection liquid path 311. Furthermore, the first unit 302p and the second unit 302s are connected by the unit connection pipe 319.

The suction port 314 is connected to the suction hose 316 and is connected to the pressure source 303 via a connection liquid path 312. The first unit 302p and the second unit 302s are connected to a reservoir tank 307 via the suction hose 316. The reservoir tank 307 is a brake fluid source that stores brake fluid, and is a low-pressure portion opened to atmospheric pressure.

Furthermore, the pressure source 303 and the pressure regulation means 305 are connected via a connection liquid path 308. In addition, the cutoff valve 304 and the pressure regulation means 305 are connected via a connection liquid path 309.

The output port 325 is connected to the pressure regulation means 305 via a connection liquid path 310. In addition, the first unit 302p and the second unit 302s are connected to an input port 326 of the third unit 300 from the output port 325 via a relay pipe 327.

Individual wheel pressure regulation means 320 of the third unit 300 is connected to the input port 326 via a connection liquid path 328. Furthermore, the individual wheel pressure regulation means 320 is connected to the wheel cylinder port 315 via a connection liquid path 329.

Furthermore, the individual wheel pressure regulation means 320 of the third unit 300 is connected to a return port 336 via a connection liquid path 335. The return port 336 is connected to the reservoir tank 307 via a return pipe 337.

A so-called X (cross) pipe configuration is adopted in which the output of the first unit 302p is connected to the left front-wheel wheel cylinder 318a and the right rear-wheel wheel cylinder 318d, and the output of the second unit 302s is connected to the right front-wheel wheel cylinder 318b and the left rear-wheel wheel cylinder 318c. Note that an H pipe in which the front wheel is connected to the first unit 302p and the rear wheel is connected to the second unit 302s may be adopted.

The pressure source 303 takes in the brake fluid stored in the reservoir tank 307 based on a command from the main controller 306 and discharges a required flow rate to the pressure regulation means 305.

The pressure regulation means 305 regulates the pressure of the brake fluid supplied from the pressure source 303 based on a command from the main controller 306 and outputs a desired pressure to the output port 327 and the cutoff valve 304 side. Here, in the pressure regulation means 305, the connection liquid path 309 and the connection liquid path 310 communicate with each other (not illustrated).

The individual wheel pressure regulation means 320 is a backup pressure regulation means (redundant individual wheel pressure regulation means) in a case where an abnormality occurs in the system and the braking force (fluid pressure) of each wheel cannot be controlled only by the pressure source 303, the cutoff valve 304, and the pressure regulation means 305.

The cutoff valve 304 is opened/closed based on a command from the main controller 306 to communicate/cut off between the connection liquid path 309 and the connection liquid path 311. Note that the cutoff valve 304 has a so-called normal open structure, and is opened, that is, the connection liquid path 309 and the connection liquid path 311 are in an open = communicated state when there is no command (electric signal) from the main controller 306 and no energization.

The main controllers 306p and 306s of the first unit 302p and the second unit 302s receive signals (target brake fluid pressures) from other ECUs by the communication means. In addition, an application for preventing an unstable behavior of the vehicle, specifically, an ABS or an anti-skid function is mounted, and a function of monitoring the vehicle behavior, the wheel speed, and the like and adjusting the braking force of each wheel as necessary is provided. The pressure source 303, the cutoff valve 304, and the pressure regulation means 305 are controlled to control the fluid pressure of each wheel so as to become the fluid pressure that achieves the desired braking force. The main controller 306 includes a microcontroller, an actuator driver, a communication means, software, and the like.

The sub controller 330 of the third unit 300 controls the individual wheel pressure regulation means 320, and includes a microcontroller, an actuator driver, a communication means, software, and the like. Two systems of the power source system 1 and the power source system 2 are power source connected to the sub controller 330.

The wheel cylinders 318a and 318d of the present example correspond to a first wheel cylinder in the Claims,
the wheel cylinders 318b and 318c of the present example correspond to a second wheel cylinder in the Claims, the first unit 302p and the second unit 302s of the present example correspond to a first fluid pressure unit and a second fluid pressure unit in the Claims, and the unit connection pipe 319 of the present example corresponds to a connection pipe in the Claims. The cutoff valves 304p and 304s of the present example correspond to a first cutoff valve and a second cutoff valve in the Claims, and the main controllers 306p and 306s of the present example correspond to a first control unit and a second control unit in the Claims. A configuration in which the pressure sources 303p and 303s and the pressure regulation means 305p and 305s are combined according to the present example corresponds to a first pressure regulation means and a second pressure regulation means in the Claims. In addition, the pressure regulation means 320 of the present example corresponds to a third pressure regulation means and a fourth pressure regulation means in the Claims, and the sub controller 330 corresponds to a third control unit.

Next, an operation of the fluid pressure control system 301 according to the third embodiment will be described.

### (Normal Control at time of System Normal)

In the first unit 302p and the second unit 302s, the cutoff valve 304 is closed and the connection liquid path 309 and the connection liquid path 311 are cut off from each other by a command from the main controller 306. In addition, the pressure source 303 and the pressure regulation means 305 are controlled, and a desired pressure is output to the wheel cylinder 318.

When the main controller 306 detects the unstable behavior of the vehicle and the braking force operation by the ABS or the anti-skid function is required, the required pressure is supplied to apply the required braking force to each of the wheels FL to RR of the wheel cylinder 318. At this time, in the application software of the ABS and the anti-skid function, the control intervention determination/braking force operation amount calculation may be performed by either the first fluid pressure unit 302p or the second fluid pressure unit 302s, and for example, when the first fluid pressure unit 302p mainly performs the control calculation, the fluid pressure command value of the wheel cylinder 318b/318c connected to the second fluid pressure unit 302s may be transmitted and controlled using a communication means. Of course, conversely, the second fluid pressure unit 302s may mainly perform the calculation and transmit a fluid pressure command value to the first fluid pressure unit 302p. Alternatively, the first fluid pressure unit 203p and the second fluid pressure unit 203s may independently determine control intervention and operation. Since the two fluid pressure units having the same function are configured, such a combination is possible.

### (Backup Control in System Defect)

Here, as an example, process performed by the main controller 306 when the pressure regulation means of the second unit 302s is defected (failed) will be described according to the flowchart of FIG. 2. In step S401, determination is made on whether or not the second unit 302s can be fluid pressure controlled. The determination is made by a failure detection logic (not illustrated) of the pressure source 303, the cutoff valve 304, the pressure regulation means 305, and the main controller 306 incorporated in the main controller 306, and the process proceeds to step S402 when determined that the fluid pressure control is possible, and proceeds to step S403 when determined that the fluid pressure control is not possible = the system defect.

In step S402, the normal control at the time of the system normal described in the [0105] above is continued.

In step S403, the process shifts to backup control, and the process proceeds to step S404. Accordingly, the cutoff valve 304p of the first unit 302p is opened. With this operation, the connection liquid path 309p and the connection liquid path 311p communicate with each other, and the pressure regulated by the pressure regulation means 305p is applied to the unit connection port 313s of the second unit 302s via the unit connection pipe 319 together with the output ports 325a/325d.

In step S404, the sub controller 330 of the third unit 300 is notified that the system has shifted to the backup control, and the target fluid pressure of each wheel is transmitted via the communication means 1 or 2. The individual wheel pressure regulation means 320 of the third unit 300 recognizes that the backup control is performed, and controls the fluid pressure of each wheel cylinder.

When the second unit 302s determines that the system defect has occurred, the pressure source 303s, the cutoff valve 304s, and the pressure regulation means 305s are all deactivated (de-energized), the cutoff valve 304s is opened, and the connection liquid path 309s and the connection liquid path 311s communicate with each other. That is, the main controllers 306p and 306s open both cutoff valves 304p and 304s when a failure of one of the first unit 302p and the second unit 302s is detected.

Therefore, the pressure regulated by the pressure regulation means 305p of the first unit 302p enters the unit connection port 313s of the second unit 302s through the connection liquid path 311p, the unit connection port 313p, and the connection liquid path 319 in addition to the connection liquid path 310a/310d, and is also applied to the connection liquid path 311s, the connection liquid path 309s, the pressure regulation means 305s (deactivated state), and the connection liquid path 310b/310c.

Subsequently, process performed by the sub controller 330 will be described according to the flowchart of FIG. 3.

This process is performed in the sub controller 330 in the third unit 330. The sub controller 330 is configured independently of the main controller 306 of the first unit 302p and the second unit 302s so as not to be affected by failure, and the sub controller 330 of the third unit 300 and the individual wheel pressure regulation means 320 can continue to perform their functions even if the main controller 306s of the second unit 302s fails and pressure regulation cannot be performed.

In step S501, whether in the backup state is determined. This is determined based on whether a failure of any pressure regulation system has occurred in the first unit 302p or the second unit 302s and a backup control is requested (flowchart of FIG. 2). In step S501, when determined as not the backup control state (i.e., when the system is normal), the process proceeds to step S502.

In step S502, the normal control at the time of the system normal described in the [0105] above is continued. That is, the individual wheel pressure regulation means 320 is not operated, and the pressure regulated by the pressure regulation means 305 is transmitted to the wheel cylinder 318 as it is.

In a case where it is determined in step S501 as the backup control state, the process proceeds to step S503. In step S503, the fluid pressure target of each wheel is received. In this case, the fluid pressure target of each wheel based on the calculation result of the first unit 302p is received via the communication means. The fluid pressure target of the second unit 302s in which the failure has occurred is ignored even if it is output. Next, the process proceeds to step S504.

In step S504, the individual wheel pressure regulation means 320 controls each pressure to each received wheel fluid pressure. As described in [0112] above, since the supplied brake fluid of the pressure source 303p of the normal system can be transmitted to the connection liquid path 310 of the first unit 302p and the second unit 302s, the brake fluid may be distributed to each wheel cylinder 318. Therefore, the individual wheel pressure regulation means 320 regulates the pressure of the brake fluid supplied to the connection liquid path 310, and finally regulates the fluid pressure of each wheel. At this time, the brake fluid excessive in the wheel cylinder as a result of the pressure regulation is returned to the reservoir tank via the return pipe 337.

As described above, the fluid pressure in the connection liquid paths 310a/310d of the first unit 302p is further regulated by the individual wheel pressure regulation means 320, and is applied to the wheel cylinders 318a/318d via the connection liquid paths 329a/329d, the wheel cylinder ports 315a/315d, and the wheel cylinder pipe 317a/317d. The fluid pressure in the connection liquid path 310b/310c of the second unit 302s is further regulated by the individual wheel pressure regulation means 320, and is also applied to the wheel cylinders 318b/318c via the connection liquid paths 329b/329c, the wheel cylinder ports 315b/315c, and the wheel cylinder pipe 317b/317c.

As a result, even when the second unit 302s is defected, a desired pressure is output to the wheel cylinder 318 similarly to the time of system normal, and it becomes possible to independently apply a required braking force to each of the wheels FL to RR of the wheel cylinder 318.

Note that the above is an example of a case where the second unit 302s is defected, but even in a case where the first unit 302p is defected, the first unit 302p and the second unit 302s are merely interchanged in the process of step S401, and the operation itself is similar.

Next, operational effects of the third embodiment will be described.

The fluid pressure control system 301 of the third embodiment includes two fluid pressure units having the same configuration, a first unit 302p and a second unit 302s, and a third unit 300, where the first unit 302p includes a main controller 306p, the second unit 302s includes a main controller 306s, and in each fluid pressure unit, a cutoff valve 304 controlled only by the main controller 306 included in each fluid pressure unit is provided, and upstream sides (side opposite to the wheel cylinder) of the cutoff valve 304 provided in each unit are connected by the unit connection pipe 319, and the unit connection pipe 319 is provided.

Therefore, since the two fluid pressure units and the ECUs included in each fluid pressure unit are separated, even if a failure occurs in either one of the fluid pressure unit of the first unit 302p and the second unit 302s/ECU, the other fluid pressure unit/ECU is not affected by the failure, and thus, the discharge fluid pressure from the other fluid pressure unit can be supplied to all the wheels, and the braking force can be secured, so that higher reliability can be obtained.

Furthermore, by providing the individual wheel pressure regulation means 320, it is possible to individually regulate the fluid pressure generated in the fluid pressure unit in each wheel, it is possible to redundantly continue braking force control such as more advanced ABS and anti-skid function, and it is possible to obtain higher reliability as a brake device.

In addition, although the first/second units have the same configuration, since the two units operate independently by the cutoff valve 304 at the time of system normal and the first/second unit can be control-constructed in consideration of only the fluid pressure control of the connected wheel cylinder, the control and the consideration of the affect at the time of failure are simplified. Therefore, there is also an advantage that the system configuration is simplified.

In this configuration, the number of sub controllers 330 is reduced by one by separating the individual wheel pressure regulation means 320 into the third unit 300, as compared with the first and second examples. However, since the number of pipes increases as the relay pipe 327 and the return pipe 337, it is preferable to select a preferable one in consideration of an in-vehicle layout and the like.

### [Fourth Embodiment]

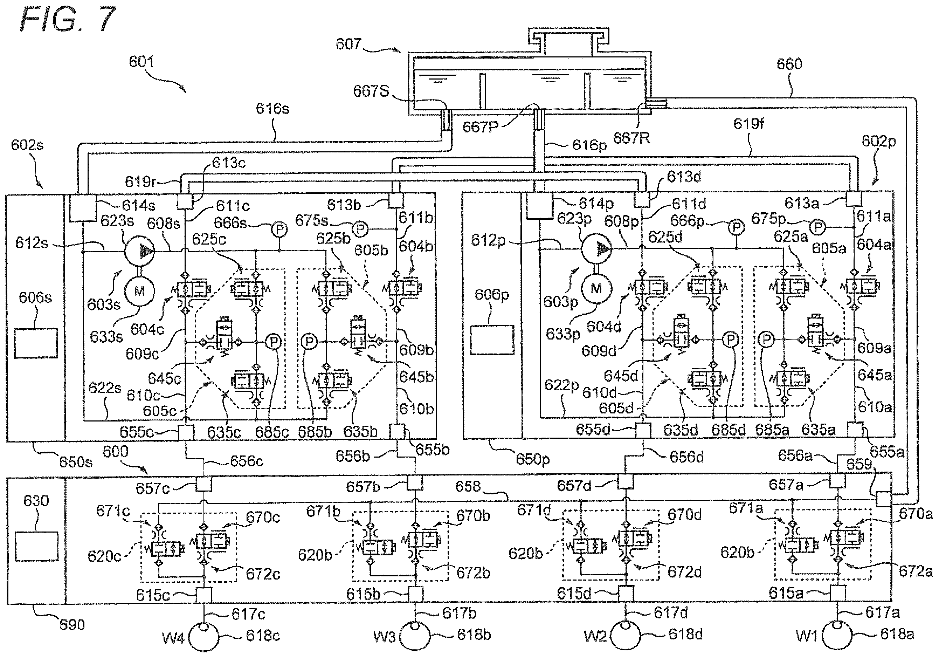

FIG. 7 is a configuration diagram of a fluid pressure control system 601 according to a fourth embodiment. Similarly to the first, second, and third embodiments, the fluid pressure control system 601 is a system mainly assumed to be applied to an automated driving vehicle of higher than or equal to Level 4. In addition, the fourth embodiment is an embodiment in which a more specific hydraulic circuit component is used with respect to the third embodiment.

The fluid pressure control system 601 causes a wheel cylinder (braking force applying unit) 618 to generate a brake fluid pressure (wheel cylinder fluid pressure) to press a brake pad provided on each of the wheels FL to RR against a brake disc provided on the wheel side and apply a braking force to each of the wheels FL to RR.

The fluid pressure control system 601 includes a first unit 602p and a second unit 602s. The first unit 602p and the second unit 602s are units in which a pressure source 603, a cutoff valve 604, a pressure regulation means 605, and an ECU 650 are integrally provided. A third unit 600 is a unit in which an individual wheel pressure regulation means 620 and an ECU 690 are integrally provided.

The first unit 602p and the second unit 602s include a unit connection port 613, a suction port 614, and an output port 655.

The unit connection port 613 is connected to a unit connection pipe 619 and is connected to the cutoff valve 604 via a connection liquid path 611. Furthermore, the first unit 602p and the second unit 602s are connected by way of the unit connection pipe 619.

The suction port 614 is connected to the suction hose 616 and is connected to the pressure source 603 via a connection liquid path 612. The first unit 602p and the second unit 602s are connected to a reservoir tank 607 via the suction hose 616. Specifically, the reservoir tank 607 is partitioned into three sections, where a primary liquid chamber 667P is connected to the first unit 602p, and a secondary liquid chamber 667S is connected to the second unit 602s. A return liquid chamber 667R is connected to the third unit 600. Note that the reservoir tank 607 is a brake fluid source that stores brake fluid, and is a low-pressure portion opened to atmospheric pressure.

The output port 655 is connected to the pressure regulation means 605 via a connection liquid path 610. In addition, the first unit 602p and the second unit 602s are connected to an input port 657 of the third unit via the output port 655 and a relay pipe 656. The path eventually adopts a so-called X (cross) pipe configuration in which the primary system of the first unit 602p is connected to the left front-wheel wheel cylinder 618a and the right rear-wheel wheel cylinder 618d, and the secondary system of the second unit 602s is connected to the right front-wheel wheel cylinder 618b and the left rear-wheel wheel cylinder 618c. An H pipe connecting the front wheel to the primary system and the rear wheel to the secondary system may be adopted.

Furthermore, the pressure source 603 and the pressure regulation means 605 are connected via a connection liquid path 608. In addition, the cutoff valve 604 and the pressure regulation means 605 are connected via a connection liquid path 609.

The pressure source 603 includes a pump 623 and a motor 633 that drives the pump. Based on a command from the main controller 606, the motor 633 is rotationally controlled to suck the brake fluid stored in the reservoir tank 607 and discharge a required flow rate to the pressure regulation means 605.

The pressure regulation means 605 includes a pressure increasing control valve 625, a pressure reducing control valve 635, a communication valve 645, a pressure sensor 685, and a pressure sensor 666, and regulates the pressure of the brake fluid supplied from the pressure source 603 based on a command from the controller 606. That is, when the pressure detected by the pressure sensor 685/665 is fed back and increased, the pressure increasing control valve 625 is opened and the pressure reducing control valve 635 is closed, and when the pressure is reduced, the pressure increasing control valve 625 is closed and the pressure reducing control valve 635 is opened to obtain a desired pressure. The regulated pressure is output to the output port 655 and the cutoff valve 604 side by opening the communication valve 645. One of each of the pressure increasing control valve 625, the pressure reducing control valve 635, the communication valve 645, and the pressure sensor 685 are assigned to each output port 655. For example, the pressure increasing control valve 625a, the pressure reducing control valve 635a, the communication valve 645a, and the pressure sensor 685a are assigned to the output port 655a connected to the FL-wheel wheel cylinder 618a. Thus, the brake fluid supplied from the pressure source 603 can be independently regulated so that the wheel cylinder of each wheel has a desired pressure. Therefore, the fluid pressure control system 601 can independently regulate the pressures of all the four wheels.

The cutoff valve 604 opens/closes based on a command from the controller 606 to communicate/cut off between the connection liquid path 609 and the connection liquid path 611. Note that the cutoff valve 604 has a so-called normal open structure, and is opened, that is, the connection liquid path 609 and the connection liquid path 611 are in an open = communicated state when there is no command (electric signal) from the main controller 606 and no energization.

The ECU 650 is an electronic control unit (ECU) that controls the first unit 602p and the second unit 602s, and interiorly includes a main controller 606.

The main controller 606 receives a signal (target brake fluid pressure) from another ECU by the communication means. In addition, an application for preventing an unstable behavior of the vehicle, specifically, an ABS or an anti-skid function is mounted, and a function of monitoring the vehicle behavior, the wheel speed, and the like and adjusting the braking force of each wheel as necessary is provided. The pressure source 603, the cutoff valve 604, and the pressure regulation means 605 are controlled to control the fluid pressure of each wheel so as to become the fluid pressure that achieves the desired braking force.

A connection liquid path 672 is formed from the input port 657 to the wheel cylinder port 615 of the third unit 600, and a backup pressure increasing valve 670 is provided on the connection liquid path 672. On the connection liquid path 672, an oil path is branched between the backup pressure increasing valve 670 and the wheel cylinder port 615, and the backup pressure reducing valve 671 is provided on an oil path different from the wheel cylinder port 615. The backup pressure reducing valve 671 is connected to the return port 659 via the return connection liquid path 658. The return port 659 is connected to a return liquid chamber 667R of the reservoir tank 607 via a return pipe 660.

An individual wheel pressure regulation means 620 refers to a portion including the backup pressure increasing valve 670, the backup pressure reducing valve 671, the connection liquid path 672, and the return connection liquid path 658. Based on a command from the controller 630 of the ECU 690, the backup pressure increasing valve 670 can control the pressure increasing amount by restricting the inflow to the wheel cylinder 618 with respect to the flow rate generated at the input port 657 at the time of the backup control. The backup pressure reducing valve 671 can control the pressure reducing amount of the wheel cylinder 618 by causing the pressure generated in the wheel cylinder to flow out to the connection liquid path 658. Therefore, if there is a means for pouring the brake fluid into the input port 657, the pressure regulation of each wheel can be continued.

The controller 630 controls the individual wheel pressure regulation means 620, and includes a microcontroller, an actuator driver, a communication means, software, and the like. At this time, two power source connections are connected. The functions of the controller 606 and the controller 630 are independent from each other and are not affected by each other's failure.

The wheel cylinders 618a and 618d of the present example correspond to a first wheel cylinder in the Claims,
the wheel cylinders 618b and 618c of the present example correspond to a second wheel cylinder in the Claims, the first unit 602p and the second unit 602s of the present example correspond to a first fluid pressure unit and a second fluid pressure unit in the Claims, and the unit connection pipe 619 of the present example corresponds to a connection pipe in the Claims. The cutoff valves 604p and 604s of the present example correspond to a first cutoff valve and a second cutoff valve in the Claims, and the controllers 606p and 606s of the present example correspond to a first control unit and a second control unit in the Claims. A configuration in which the pressure sources 603p and 603s and the pressure regulation means 605p and 605s are combined according to the present example corresponds to a first pressure regulation means and a second pressure regulation means in the Claims. In addition, the individual wheel pressure regulation means 620 of the present example corresponds to a third pressure regulation means and a fourth pressure regulation means in the Claims, and the controller 630 corresponds to a third control unit.

Next, an operation of the fluid pressure control system 601 according to the fourth embodiment will be described.

### (Normal Control at time of System Normal)

In the first unit 602p and the second unit 602s, the cutoff valve 604 is closed by a command from the controller 606 in the ECU 650, and the connection liquid path 609 and the connection liquid path 611 are cut off. In addition, the pressure source 603 and the pressure regulation means 605 are controlled, and a desired pressure is output to the wheel cylinder 618. At this time, the third unit 600 is in a standby state in which nothing is done, and the pressure output by the pressure regulation means 605 is generated in the wheel cylinder 618 as it is.

When the controller 606 detects the unstable behavior of the vehicle and the braking force operation by the ABS or the anti-skid function is required, the pressure regulation means 605 supplies the required pressure to the wheel cylinder 618 to apply the required braking force to each of the wheels FL to RR. At this time, in the application of the ABS or the anti-skid function, at least one of the first fluid pressure unit 602p and the second fluid pressure unit 602s can perform the control intervention determination/braking force operation amount calculation. For example, when the controller 606p of the first fluid pressure unit 602p mainly performs control calculation, the fluid pressure command value of the wheel cylinders 618b/618c connected to the second fluid pressure unit 602s may be transmitted to the controller 606s using the communication means, and may be controlled according to the pressure the controller 606s has received the command for. Of course, conversely, the controller 606s of the second fluid pressure unit 602s may mainly perform the calculation and transmit the fluid pressure command value to the first fluid pressure unit 602p. Alternatively, the controllers of the first fluid pressure unit 602p and the second fluid pressure unit 602s may independently determine the control intervention and the operation. Since two units having exactly the same function are prepared as the redundant system, such a combination is possible.

### (Backup Control in System Defect)

Here, as an example, processes performed by the controller 606p of the ECU 650 when the pressure regulation function of the second unit 602s is defected will be described according to the flowchart of FIG. 2.

In step S401, determination is made on whether or not the second unit 602s can be fluid pressure controlled. The determination is made by a failure detection logic (not illustrated) of the pressure source 603, the cutoff valve 604, the pressure regulation means 605, and the ECU 650 incorporated in the ECU 650, and the process proceeds to step S402 when determined that the fluid pressure control is possible and the process proceeds to step S403 when determined that the fluid pressure control is not possible = the system defect.

In step S402, the normal control at the time of the system normal described in the [0143] above is continued.

In step S403, the process shifts to the backup control. That is, the cutoff valves 604a/604d of the first unit 602p are opened. With this operation, the connection liquid path 609a and the connection liquid path 611a and the connection liquid path 609d and the connection liquid path 611d communicate with each other, and the pressure regulated by the pressure regulation means 605a/605d is applied to the unit connection port 613b/613c of the second unit 602s via the unit connection pipe 619 together with the output ports 655a/655d.

In step S404, the controller 630 of the third unit 600 is notified that the system has shifted to the backup control, and the target fluid pressure of each wheel is transmitted via the communication means 1 or 2. The individual wheel pressure regulation means 620 recognizes that the backup control is performed, and controls the fluid pressure of each wheel cylinder.

Furthermore, when the second unit 602s determines that system defect has occurred, the pressure source 603s, the cutoff valve 604b/604c, and the pressure regulation means 605b/605c are also deactivated (de-energized), the cutoff valve 604b/604c is opened, and the connection liquid path 609b and the connection liquid path 611b and the connection liquid path 609c and the connection liquid path 611c communicate with each other.

Therefore, the pressure regulated by the pressure regulation means 605a/605d of the first unit 602p is also applied from the unit connection port 613b/613c of the second unit 602s to the connection liquid path 611b/611c, the connection liquid path 609b/609c, the connection liquid path 610b/610c, and the output port 655c/655d.

Next, processes performed by the controller 630 of the third unit 600 will be described with reference to the flowchart of FIG. 3.

This process is performed by the controller 630 of the third unit 600. The controller 630 is configured independently of the controller 606 so as not to be affected by the failure, and the controller 630 and the individual wheel pressure regulation means 620 can continue to perform their functions even if the controller 606s of the second unit 602s fails and the pressure regulation cannot be performed.

In step S501, whether in the backup state is determined. This is determined based on whether a failure of any pressure regulation system has occurred in the first unit 602p or the second unit 602s and a backup control is requested (flowchart of FIG. 2). In step S501, when determined as not the backup control state (i.e., when the system is normal), the process proceeds to step S502.

In step S502, the normal control at the time of the system normal described in the [0143] above is continued. That is, the individual wheel pressure regulation means 620 is not operated, and the pressure regulated by the pressure regulation means 605 is transmitted to the wheel cylinder 618 as it is.

In a case where it is determined in step S501 as the backup control state, the process proceeds to step S503. In step S503, the fluid pressure target of each wheel is received. In this case, the fluid pressure target of each wheel based on the calculation result of the first unit 602p is received via the communication means 1 or 2. Next, the process proceeds to step S504.

In step S504, the individual wheel pressure regulation means 620 controls each pressure to each wheel fluid pressure. As described in [0148] above, since the supplied brake fluid of the pressure source 603p of the normal system can be transmitted to the connection liquid path 610 of the first unit 602p and the second unit 602s, the brake fluid may be distributed to each wheel cylinder 618. Therefore, the individual wheel pressure regulation means 620 regulates the pressure of the brake fluid supplied to the connection liquid path 610, and finally regulates the fluid pressure of each wheel.

The individual wheel pressure regulation means 620 regulates the pressure of the brake fluid supplied to the connection liquid path 610 using the backup pressure increasing valve 670 and the backup pressure reducing valve 671, and finally regulates the fluid pressure of each wheel. At this time, a pressure sensor is not used for detecting the pressure of the wheel cylinder, but the amount of pressure increase/reduction is estimated, and slight accuracy deterioration is tolerated. In the estimation, characteristics of the differential pressure and the flow rate generated in the electromagnetic valve are grasped in advance by experiments or the like, and the amount of brake fluid flowing into the caliper is obtained from the flow rate per unit time to estimate the pressure. Note that as the differential pressure generated in the electromagnetic valve, the pressure of the connection liquid path 610 can be detected by the pressure sensor 685 of the normal system, and an estimated value is used as the pressure of the wheel cylinder.

As described above, the fluid pressure in the connection liquid path 610a/610d of the first unit 602p is regulated by the individual wheel pressure regulation means 620a/620d, and is applied to the wheel cylinders 618a/618d via the wheel cylinder ports 615a/615d and the wheel cylinder pipe 617a/617d. The fluid pressure in the connection liquid path 610b/610c of the second unit 602s is regulated by the individual wheel pressure regulation means 620b/620c, and is also applied to the wheel cylinders 618b/618c via the wheel cylinder ports 615b/615c and the wheel cylinder pipe 617b/617c.

As a result, even when the second unit 602s is defected, a desired pressure is output to the wheel cylinder 618 similarly to the time of system normal, and it becomes possible to independently apply a required braking force to each of the wheels FL to RR of the wheel cylinder 618.

Note that the above is an example of a case where the second unit 602s is defected, but even in a case where the first unit 602p is defected, the first unit 602p and the second unit 602s are merely interchanged in the process of step S403, and the operation itself is similar.

Next, operational effects of the fourth embodiment will be described.

The fluid pressure control system 601 of the fourth embodiment includes two fluid pressure units having the same configuration, a first unit 602p and a second unit 602s, and a third unit 600, where the first unit 602p includes a controller 606p, the second unit 602s includes a controller 606s, and in each fluid pressure unit, a cutoff valve 604 controlled only by the controller 606 included in each unit is provided, and upstream sides (side opposite to the wheel cylinder) of the cutoff valves 604 provided in each fluid pressure unit are connected by the unit connection pipe 619, and the unit connection pipe 619 is provided.

Therefore, since the fluid pressure units and the ECUs included in each fluid pressure unit are separated, even if a failure occurs in either one of the fluid pressure unit of the first unit 602p and the second unit 602s/ECU, the other fluid pressure unit/ECU is not affected by the failure, and thus, the discharge fluid pressure from the other fluid pressure unit can be supplied to all the wheels, and the braking force can be secured, so that higher reliability can be obtained.

Furthermore, by providing the individual wheel pressure regulation means 620 and the controller 630 in the third unit 600, it is possible to individually regulate the fluid pressure generated in the first/second units for each wheel, and it is possible to redundantly continue the braking force control such as more advanced ABS and anti-skid function, and it is possible to obtain higher reliability as a brake device.

In addition, although the first/second units have the same configuration, since the units operate independently by the cutoff valve 604 when the system is normal, the first/second unit can be control-constructed in consideration of only the fluid pressure control of the connected wheel cylinder, so that the control and the influence consideration at the time of failure are simplified. Therefore, there is also an advantage that the system configuration is simplified.

In this configuration, the number of controllers is reduced by one by separating the individual wheel pressure regulation means 620 into the third unit 600 as compared with the first and second examples. However, since the number of the relay pipe 656 and the return pipe 660 increases, it is preferable to select a preferable one in consideration of an in-vehicle layout and the like.

### [Fifth Embodiment]

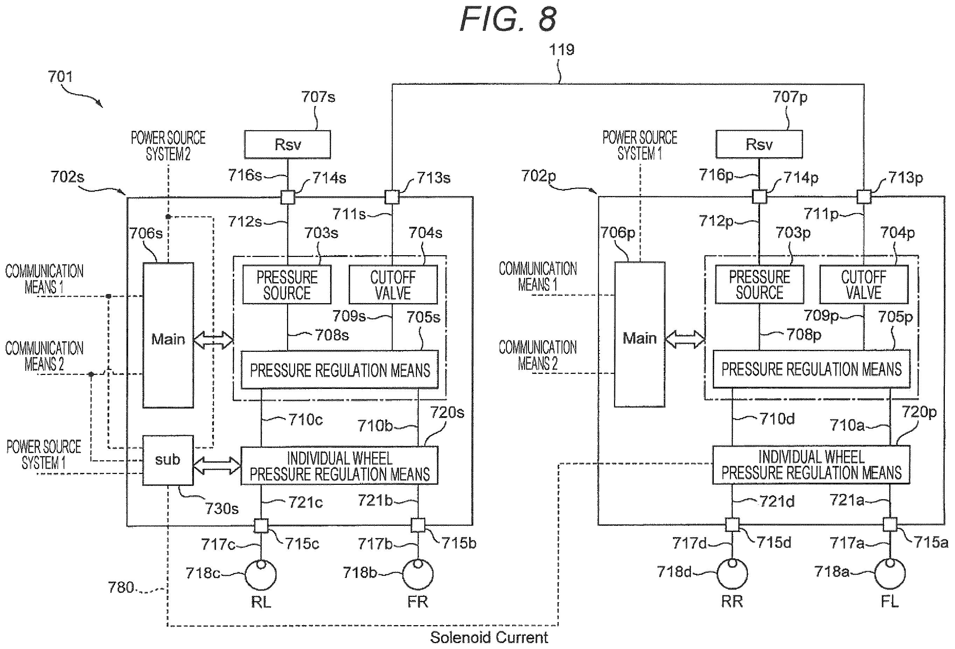

FIG. 8 is a configuration diagram of a fluid pressure control system 701 according to a fifth embodiment. Similarly to the first through fourth embodiments, the fluid pressure control system 701 is a system mainly assumed to be applied to an automated driving vehicle of higher than or equal to Level 4. The present embodiment has the same configuration as the first embodiment in many points, and only differences will be described.

The fluid pressure control system 101 of the first embodiment includes the first unit 102p and the second unit 102s, each unit being integrally provided with the pressure source 103, the cutoff valve 104, the pressure regulation means 105, the individual wheel pressure regulation means 120, the main controller 106, and the sub controller 130, but the fluid pressure control system 701 of the fifth embodiment has a configuration in which the sub controller 130p is deleted from the first unit 702p. Other configurations and functions are similar to those of the first embodiment. Note that the sub controller of the second unit may be deleted, and the sub controller of the first unit may remain.

Alternatively, an electromagnetic valve drive signal line 780 is provided from the second unit 702s, and is connected to the individual wheel pressure regulation means 720p of the first unit 702p.

That is, the sub controller 730s of the second unit 702s is configured to control the individual wheel pressure regulation means 720p of the first unit 702p and the individual wheel pressure regulation means 720s of the second unit 702s.

The sub controller 730s includes a microcontroller, an actuator driver, a communication means, software, and the like. At this time, two power source connections are connected. The functions of the sub controller 730s and the main controller 706s are independent from each other, and are not affected by each other's failure. Therefore, when a failure occurs in the system and the operation of the individual wheel pressure regulation means 720 is required, not only the individual wheel pressure regulation means 720s of the second unit 702s but also the individual wheel pressure regulation means 720p of the first unit 702p can be controlled.

The wheel cylinders 718a and 718d of the present example correspond to a first wheel cylinder in the Claims,
the wheel cylinders 718b and 718c of the present example correspond to a second wheel cylinder in the Claims, the first unit 702p and the second unit 702s of the present example correspond to a first fluid pressure unit and a second fluid pressure unit in the Claims, and the unit connection pipe 719 of the present example corresponds to a connection pipe in the Claims. The cutoff valves 704p and 704s of the present example correspond to a first cutoff valve and a second cutoff valve in the Claims, and the controllers 706p and 706s of the present example correspond to a first control unit and a second control unit in the Claims. A configuration in which the pressure sources 703p and 703s and the pressure regulation means 705p and 705s are combined according to the present example corresponds to a first pressure regulation means and a second pressure regulation means in the Claims. Furthermore, the individual wheel pressure regulation means 720p and 720s of the present example correspond to a third pressure regulation means and a fourth pressure regulation means in the Claims, and the sub controller 730s corresponds to a third control unit.

Next, an operation of the fluid pressure control system 701 according to the fifth embodiment will be described.

### (Normal Control at time of System Normal)

The operation in the normal state is the same as that in the first embodiment since the individual wheel pressure regulation means does not operate, and the description thereof will be omitted here.

### (Backup Control in System Defect)

Here, a process performed by the main controller 706p when the pressure regulation means of the second unit 702s is defected (failed) will be described according to the flowchart of FIG. 2.

In step S401, determination is made on whether or not the second unit 702s can be fluid pressure controlled. The determination is made by a failure detection logic (not illustrated) of the pressure source 703, the cutoff valve 704, the pressure regulation means 705, and the main controller 706 incorporated in the main controller 706, and the process proceeds to step S402 when determined that the fluid pressure control is possible, and proceeds to step S403 when determined that the fluid pressure control is not possible = the system defect.

In step S402, the normal control in the system normal state is continued.

In step S403, the process shifts to backup control, and the process proceeds to step S404. Accordingly, the cutoff valve 704p of the first unit 702p is opened. With this operation, the connection liquid path 709p and the connection liquid path 711p communicate with each other, and the pressure regulated by the pressure regulation means 705p is applied to the unit connection port 713s of the second unit 702s via the unit connection pipe 719 together with the wheel cylinders 718a/718d.

In step S404, the sub controller 730s is notified that the system has shifted to the backup control, and the target fluid pressure of each wheel is transmitted via the communication means 1 or 2. The individual wheel pressure regulation means 720 recognizes that the backup control is performed, and controls the fluid pressure of each wheel cylinder.

When the second unit 702s determines that the system defect has occurred, the pressure source 703s, the cutoff valve 704s, and the pressure regulation means 705s are all deactivated (de-energized), the cutoff valve 704s is opened, and the connection liquid path 709s and the connection liquid path 711s communicate with each other. That is, the main controllers 706p and 706s open both cutoff valves 704p and 704s when a failure of one of the first unit 702p and the second unit 702s is detected.

Therefore, the pressure regulated by the pressure regulation means 705p of the first unit 702p enters the unit connection port 713s of the second unit 702s through the connection liquid path 711p, the unit connection port 713p, and the unit connection pipe 719 in addition to the connection liquid path 710a/710d, and is also applied to the connection liquid path 711s, the connection liquid path 709s, the pressure regulation means 705s, and the connection liquid path 710b/710c.

Subsequently, the process performed by the sub controller 730s will be described according to the flowchart of FIG. 3.

This process is performed in the sub controller 730s of the second unit 702s. The sub controller 730s is configured independently of the main controller 706p/706s so as not to be affected by failure, and the sub controller 730s and the individual wheel pressure regulation means 720p/720s can continue to perform their functions even if the main controller 706s of the second unit 702s fails and pressure regulation cannot be performed.

In step S501, whether in the backup state is determined. This is determined based on whether a failure of any pressure regulation system has occurred in the first unit 702p or the second unit 702s and a backup control is requested (flowchart of FIG. 2). In step S501, when determined as not the backup control state (i.e., when the system is normal), the process proceeds to step S502.

In step S502, the normal control in the system normal state is continued. That is, the individual wheel pressure regulation means 720 is not operated, and the pressure regulated by the pressure regulation means 105 is transmitted to the wheel cylinder 718 as it is.

In a case where it is determined in step S501 as the backup control state, the process proceeds to step S503. In step S503, the fluid pressure target of each wheel is received. In this case, the fluid pressure target of each wheel based on the calculation result of the first unit 702p is received via the communication means. Next, the process proceeds to step S504.

In step S504, the individual wheel pressure regulation means 720 controls each pressure to the received individual wheel fluid pressure. As described in [0175] above, since the supplied brake fluid of the pressure source 703p of the normal system can be transmitted to the connection liquid path 710 of the first unit 702p and the second unit 702s, the brake fluid may be distributed to each wheel cylinder 718. Therefore, the individual wheel pressure regulation means 720 regulates the pressure of the brake fluid supplied to the connection liquid path 710, and finally regulates the fluid pressure of each wheel. At this time, a control signal is transmitted to the individual wheel pressure regulation means 720p of the first unit 702p via the electromagnetic valve drive signal line 780, and the electromagnetic valve of the individual wheel pressure regulation means 720p is driven, whereby the brake fluid pressure can be controlled to a desired brake fluid pressure.

As described above, the fluid pressure in the connection liquid paths 710a/710d of the first unit 702p is further regulated by the individual wheel pressure regulation means 720p, and is applied to the wheel cylinders 718a/718d via the connection liquid paths 721a/721d, the wheel cylinder ports 715a/715d, and the wheel cylinder pipe 717a/717d. The fluid pressure in the connection liquid path 710b/710c of the second unit 702s is further regulated by the individual wheel pressure regulation means 720, and is also applied to the wheel cylinders 718b/718c via the connection liquid paths 721b/721c, the wheel cylinder ports 715b/715c, and the wheel cylinder pipe 717b/717c.

As a result, even when the second unit 702s is defected, a desired pressure is output to the wheel cylinder 718 similarly to the time of system normal, and it becomes possible to independently apply a required braking force to each of the wheels FL to RR of the wheel cylinder 718.

Note that the above is an example of a case where the second unit 702s is defected, but even in a case where the first unit 702p is defected, the first unit 702p and the second unit 702s are merely interchanged in the process of step S403, and the operation itself is similar.

Next, operational effects of the fifth embodiment will be described.

In the fluid pressure control system 701 of the fifth embodiment, two fluid pressure units, that is, a first unit 702p and a second unit 702s are provided, where the first unit 702p includes a main controller 706p, and the second unit 702s includes a main controller 706s, and in each fluid pressure unit, a cutoff valve 704 controlled only by the main controller 706 included in each fluid pressure unit is provided, and upstream sides (side opposite to the wheel cylinder) of the cutoff valves 704 provided in each fluid pressure unit are connected by the unit connection pipe 719.

Therefore, since the two fluid pressure units and the ECUs included in each fluid pressure unit are separated, even if a failure occurs in either one of the fluid pressure unit/ECU, the other fluid pressure unit/ECU is not affected by the failure, and thus, the discharge fluid pressure from the other fluid pressure unit can be supplied to all the wheels, and the braking force can be secured.

Furthermore, the individual wheel pressure regulation means 720 is provided in each fluid pressure unit, and a sub controller 730 for controlling the same is provided in any of the fluid pressure units. For the fluid pressure unit without the sub controller 730, an electromagnetic valve drive signal line 780 to the individual wheel pressure regulation means 720 is provided to transmit a control signal and drive the same. As a result, it is possible to individually regulate the fluid pressure generated in the fluid pressure unit in each wheel, and it is possible to redundantly continue braking force control such as more advanced ABS and anti-skid function, and it is possible to obtain higher reliability as a brake device.

In addition, although the two units have the same configuration except for the presence or absence of the sub controller, since the two units operate independently by the cutoff valve 704 when the system is normal, the first/second unit 702 can be control-constructed in consideration of only the fluid pressure control of the connected wheel cylinder, so that the control and the influence consideration at the time of failure are simplified. Therefore, there is also an advantage that the system configuration is simplified.

With the deletion of the sub controller, the microcontroller of the fluid pressure control system 701 and the power supply circuit and the communication function associated therewith can be reduced, and the system can be efficiently constructed by unifying the control to the individual wheel pressure regulation means 720. In addition, since this change can be realized by the presence or absence of mounting of the related element on the ECU substrate, it is possible to cope with the change by a simple design change.

In the embodiment, the pressure source includes a pump and a motor that drives the pump, but the pump may be either a plunger pump or a rotary pump, or may be an electric piston operated by an electric motor.

### Reference Signs List

101 fluid pressure control system (brake device)
102p first unit (first fluid pressure unit)
102s second unit (second fluid pressure unit)
103p pressure source (first pressure feeding unit)
103s pressure source (second pressure feeding unit)
104p cutoff valve (first cutoff valve)
104s cutoff valve (second cutoff valve)
105p pressure regulation means (first pressure regulation unit)
105s pressure regulation means (second pressure regulation unit)
106p ECU (first control unit)
106s ECU (second control unit)
107 reservoir tank
118a, 118d wheel cylinder (first wheel cylinder)
118b, 118c wheel cylinder (second wheel cylinder)
119 unit connection pipe (connection pipe)
120p individual wheel pressure regulation means (third pressure regulation unit)
120s individual wheel pressure regulation means (fourth pressure regulation unit)
130 sub controller (third control unit)
130p sub controller (fourth control unit)
130s sub controller (fifth control unit)

## Claims

1. A brake device (101) mounted on a vehicle, the brake device (101) comprising:
a first fluid pressure unit (102p) configured to supply brake fluid to a plurality of first wheel cylinders (118a, 118d);
a second fluid pressure unit (102s) configured to supply brake fluid to a plurality of second wheel cylinders (118b, 118c);
a connection pipe (119) configured to couple the first fluid pressure unit (102p) and the second fluid pressure unit (102s) to cause the brake fluid to flow; the first fluid pressure unit (102p) including,
a first cutoff valve (104p) configured to cut off flow of the brake fluid to and from the connection pipe (119),
a first pressure regulation unit (105p) configured to regulate pressure of the brake fluid supplied to the plurality of first wheel cylinders (118a, 118d), and
a first control unit (106p) configured to control opening and closing of the first cutoff valve (104p) and the first pressure regulation unit (105p);
the second fluid pressure unit (102s) including,
a second cutoff valve (104s) configured to cut off flow of the brake fluid to and from the connection pipe (119),
a second pressure regulation unit (105s) configured to regulate pressure of the brake fluid supplied to the plurality of second wheel cylinders (118b, 118c), and
a second control unit (106s) configured to control opening and closing of the second cutoff valve (104s) and the second pressure regulation unit (105s);
a third pressure regulation unit (120p) configured to regulate brake fluid pressures supplied from the first pressure regulation unit (105p) to the plurality of first wheel cylinders (118a, 118d), respectively;
a fourth pressure regulation unit (120s) configured to regulate brake fluid pressures supplied from the second pressure regulation unit (105s) to the plurality of second wheel cylinders (118b, 118c), respectively; and
a third control unit (130) configured to control the third pressure regulation unit (120p) and the fourth pressure regulation unit (120s).

2. The brake device (101) according to claim 1, wherein the first control unit (106p) and the second control unit (106s) respectively open both the first cutoff valve (104p) and the second cutoff valve (104s) when a failure of at least one of the first fluid pressure unit (102p) and the second fluid pressure unit (102s) is detected.

3. The brake device (101) according to claim 2, wherein the third control unit (130) controls the third pressure regulation unit (120p) and the fourth pressure regulation unit (120s) in cooperation with the second pressure regulation unit (105s) when a failure of the first control unit (106p) is detected.

4. The brake device (101) according to claim 2, wherein the third control unit (130) controls the third pressure regulation unit (120p) and the fourth pressure regulation unit (120s) in cooperation with the first pressure regulation unit (105p) when a failure of the second control unit (106s) is detected.

5. The brake device (101) according to claim 1, wherein
the first control unit (106p) is connected to a first communication unit (1), a second communication unit (2), and a first power source;
the second control unit (106s) is connected to a first communication unit (1), a second communication unit (2), and a second power source, and
the third control unit (130) is connected to the first communication unit (1) and the second communication unit (2), and the first power source and the second power source.

6. The brake device (101) according to claim 1, wherein
the third control unit (130) includes,
a fourth control unit located in a same unit as the first control unit (106p) and configured to control the third pressure regulation unit (120p); and
a fifth control unit located in the same unit as the second control unit (106s) and configured to control the fourth pressure regulation unit (120s).

7. The brake device (101) according to claim 6, wherein
the first control unit (106p) is connected to a first communication unit (1), a second communication unit (2), and a first power source,
the second control unit (106s) is connected to a first communication unit (1), a second communication unit (2), and a second power source,
the fourth control unit is connected to the first communication unit (1) and the second communication unit (2), and the first power source and the second power source, and
the fifth control unit is connected to the first communication unit (1) and the second communication unit (2), and the first power source and the second power source.

## Patentansprüche

1. Bremsvorrichtung (101), die an einem Fahrzeug angebracht ist, wobei die Bremsvorrichtung (101) umfasst:
eine erste Fluiddruckeinheit (102p), die konfiguriert ist, mehreren ersten Radzylindern (118a, 118d) Bremsfluid zuzuführen;
eine zweite Fluiddruckeinheit (102s), die konfiguriert ist, mehreren zweiten Radzylindern (118b, 118c) Bremsfluid zuzuführen;
ein Verbindungsrohr (119), das konfiguriert ist, die erste Fluiddruckeinheit (102p) und die zweite Fluiddruckeinheit (102s) zu koppeln, um zu veranlassen, dass das Bremsfluid strömt; wobei die erste Fluiddruckeinheit (102p) enthält:
ein erstes Absperrventil (104p), das konfiguriert ist, die Strömung des Bremsfluids zu und von dem Verbindungsrohr (119) abzusperren,
eine erste Druckregulierungseinheit (105p), die konfiguriert ist, den Druck des den mehreren ersten Radzylindern (118a, 118d) zugeführten Bremsfluids zu regulieren, und
eine erste Steuereinheit (106p), die konfiguriert ist, das Öffnen und Schließen des ersten Absperrventils (104b) und die erste Druckregulierungseinheit (105p) zu steuern;
wobei die zweite Fluiddruckeinheit (102s) enthält:
ein zweites Absperrventil (104s), das konfiguriert ist, die Strömung des Bremsfluids zu und von dem Verbindungsrohr (119) abzusperren,
eine zweite Druckregulierungseinheit (105s), die konfiguriert ist, den Druck des den mehreren zweiten Radzylindern (118b, 118c) zugeführten Bremsfluids zu regulieren, und
eine zweite Steuereinheit (106s), die konfiguriert ist, das Öffnen und Schließen des zweiten Absperrventils (104s) und die zweite Druckregulierungseinheit (105s) zu steuern,
eine dritte Druckregulierungseinheit (120p), die konfiguriert ist, die Bremsfluiddrücke, die den ersten Radzylindern (118a, 118d) jeweils von der ersten Druckregulierungseinheit (105p) zugeführt werden, zu regulieren;
eine vierte Druckregulierungseinheit (120s), die konfiguriert ist, die Bremsfluiddrücke, die den mehreren zweiten Radzylindern (118b, 118c) jeweils von der zweiten Druckregulierungseinheit (105s) zugeführt werden, zu regulieren;
eine dritte Steuereinheit (130), die konfiguriert ist, die dritte Druckregulierungseinheit (120p) und die vierte Druckregulierungseinheit (120s) zu steuern.

2. Bremsvorrichtung (101) nach Anspruch 1, wobei die erste Steuereinheit (106p) und die zweite Steuereinheit (106s) das erste Absperrventil (104p) bzw. des zweite Absperrventil (104s) öffnen, wenn eine Störung wenigstens einer der ersten Fluiddruckeinheit (102p) und der zweiten Fluiddruckeinheit (102s) detektiert wird.

3. Bremsvorrichtung (101) nach Anspruch 2, wobei die dritte Steuereinheit (130) die dritte Druckregulierungseinheit (120p) und die vierte Druckregulierungseinheit (120s) im Zusammenwirken mit der zweiten Druckregulierungseinheit (105s) steuert, wenn eine Störung der ersten Steuereinheit (106p) detektiert wird.

4. Bremsvorrichtung (101) nach Anspruch 2, wobei die dritte Steuereinheit (130) die dritte Druckregulierungseinheit (120p) und die vierte Druckregulierungseinheit (120s) im Zusammenwirken mit der ersten Druckregulierungseinheit (105p) steuert, wenn eine Störung der zweiten Steuereinheit (106s) detektiert wird.

5. Bremsvorrichtung (101) nach Anspruch 1, wobei
die erste Steuereinheit (106p) mit einer ersten Kommunikationseinheit (1), einer zweiten Kommunikationseinheit (2) und einer ersten Leistungszelle verbunden ist;
die zweite Steuereinheit (106s) mit einer ersten Kommunikationseinheit (1), einer zweiten Kommunikationseinheit (2) und einer zweiten Leistungszelle verbunden ist, und
die dritte Steuereinheit (130) mit der ersten Kommunikationseinheit (1) und mit der zweiten Kommunikationseinheit (2) und mit der ersten Leistungsquelle und mit der zweiten Leistungsquelle verbunden ist.

6. Bremsvorrichtung (101) nach Anspruch 1, wobei
die dritte Steuereinheit (130) enthält:
eine vierte Steuereinheit, die sich in derselben Einheit wie die erste Steuereinheit (106p) befindet und die zum Steuern der dritten Druckregulierungseinheit (120p) konfiguriert ist; und
eine fünfte Steuereinheit, die sich in derselben Einheit wie die zweite Steuereinheit (106s) befindet und die zum Steuern der vierten Druckregulierungseinheit (120s) konfiguriert ist.

7. Bremsvorrichtung (101) nach Anspruch 6, wobei
die erste Steuereinheit (106p) mit einer ersten Kommunikationseinheit (1), einer zweiten Kommunikationseinheit (2) und einer ersten Leistungsquelle verbunden ist,
die zweite Steuereinheit (106s) mit einer ersten Kommunikationseinheit (1), einer zweiten Kommunikationseinheit (2) und einer zweiten Leistungsquelle verbunden ist,
die vierte Steuereinheit mit der ersten Kommunikationseinheit (1) und mit der zweiten Kommunikationseinheit (2) und mit der ersten Leistungsquelle und mit der zweiten Leistungszelle verbunden ist, und
die fünfte Steuereinheit mit der ersten Kommunikationseinheit (1) und mit der zweiten Kommunikationseinheit (2) sowie mit der ersten Leistungsquelle und mit der zweiten Leistungsquelle verbunden ist.

## Revendications

1. Dispositif de frein (101) monté sur véhicule, le dispositif de frein (101) comprenant :
une première unité de pression de fluide (102p) configurée pour alimenter un fluide de frein à une pluralité de premiers cylindres de roue (118a, 118d) ;
une deuxième unité de pression de fluide (102s) configurée pour alimenter un fluide de frein à une pluralité de deuxième cylindres de roue (118b, 118c) ;
un tube de connexion (119) configuré pour coupler la première unité de pression de fluide (102p) et la deuxième unité de pression de fluide (102s) pour amener le fluide de frein à s'écouler ; la première unité de pression de fluide (102p) incluant
une première vanne d'arrêt (104p) configurée pour arrêter un écoulement du fluide de frein vers et depuis le tube de connexion (119),
une première unité de régulation de pression (105p) configurée pour réguler une pression du fluide de frein alimenté à la pluralité de premiers cylindres de roue (118a, 118d), et
une première unité de commande (106p) configurée pour commander une ouverture et une fermeture de la première vanne d'arrêt (104p) et la première unité de régulation de pression (105p) ;
la deuxième unité de pression de fluide (102s) incluant une deuxième vanne d'arrêt (104s) configurée pour arrêter un écoulement du fluide de frein vers et depuis le tube de connexion (119),
une deuxième unité de régulation de pression (105s) configurée pour réguler une pression du fluide de frein alimenté à la pluralité de deuxièmes cylindres de roue (118b, 118c), et
une deuxième unité de commande (106s) configurée pour commander une ouverture et une fermeture de la deuxième vanne d'arrêt (104s) et la deuxième unité de régulation de pression (105s) ;
une troisième unité de régulation de pression (120p) configurée pour réguler des pressions de fluide de frein alimentées depuis la première unité de régulation de pression (105p) à la pluralité de premiers cylindres de roue (118a, 118d), respectivement ;
une quatrième unité de régulation de pression (120s) configurée pour réguler des pressions de fluide de frein alimentées depuis la deuxième unité de régulation de pression (105s) à la pluralité de deuxièmes cylindres de roue (118b, 118c), respectivement ; et
une troisième unité de commande (130) configurée pour commander la troisième unité de régulation de pression (120p) et la quatrième unité de régulation de pression (120s).

2. Dispositif de frein (101) selon la revendication 1, dans lequel la première unité de commande (106p) et la deuxième unité de commande (106s) ouvrent respectivement à la fois la première vanne d'arrêt (104p) et la deuxième vanne d'arrêt (104s) quand une défaillance de l'une au moins de la première unité de pression de fluide (102p) et de la deuxième unité de pression de fluide (102s) est détectée.

3. Dispositif de frein (101) selon la revendication 2, dans lequel la troisième unité de commande (130) commande la troisième unité de régulation de pression (120p) et la quatrième unité de régulation de pression (120s) en coopération avec la deuxième unité de régulation de pression (105s) quand une défaillance de la première unité de commande (106p) est détectée.

4. Dispositif de frein (101) selon la revendication 2, dans lequel la troisième unité de commande (130) commande la troisième unité de régulation de pression (120p) et la quatrième unité de régulation de pression (120s) en coopération avec la première unité de régulation de pression (105p) quand une défaillance de la deuxième unité de commande (106s) est détectée.

5. Dispositif de frein (101) selon la revendication 1, dans lequel
la première unité de commande (106p) est connectée à une première unité de communication (1), à une deuxième unité de communication (2), et à une première source de puissance ;
la deuxième unité de commande (106s) est connectée à une première unité de communication (1), à une deuxième unité de communication (2), et à une deuxième source de puissance, et
la troisième unité de commande (130) est connectée à la première unité de communication (1) et à la deuxième unité de communication (2), et à la première source de puissance et à la deuxième source de puissance.

6. Dispositif de frein (101) selon la revendication 1, dans lequel
la troisième unité de commande (130) inclut
une quatrième unité de commande située dans une même unité que la première unité de commande (106p) et configurée pour commander la troisième unité de régulation de pression (120p) ; et
une cinquième unité de commande située dans la même unité que la deuxième unité de commande (106s) et configurée pour commander la quatrième unité de régulation de pression (120s).

7. Dispositif de frein (101) selon la revendication 6, dans lequel
la première unité de commande (106p) est connectée à une première unité de communication (1), à une deuxième unité de communication (2), et à une première source de puissance ;
la deuxième unité de commande (106s) est connectée à une première unité de communication (1), à une deuxième unité de communication (2), et à une deuxième source de puissance,
la quatrième unité de commande est connectée à la première unité de communication (1) et à la deuxième unité de communication (2), et à la première source de puissance et à la deuxième source de puissance, et
la cinquième unité de commande est connectée à la première unité de communication (1) et à la deuxième unité de communication (2), et à la première source de puissance et à la deuxième source de puissance.
